(19) Europäisches Patentamt
European Patent Office
Office européen des brevets

(11) Publication number: 0 002 196
B1

(12) EUROPEAN PATENT SPECIFICATION

(45) Date of publication of patent specification: 04.07.84

(51) Int. Cl.³: C 08 G 81/00, C 08 F 8/30, C 08 C 19/30

(21) Application number: 78101318.0

(22) Date of filing: 07.11.78

# (54) Amine terminated block copolymers and processes for their preparation.

(30) Priority: 07.11.77 US 848962

(43) Date of publication of application: 13.06.79 Bulletin 79/12

(45) Publication of the grant of the patent: 04.07.84 Bulletin 84/27

(84) Designated Contracting States: BE DE FR GB NL

(56) References cited:
US - A - 3 838 108
US - A - 4 015 061
US - A - 4 070 344

(73) Proprietor: THE FIRESTONE TIRE & RUBBER COMPANY
1200 Firestone Parkway
Akron, Ohio 44317 (US)

(72) Inventor: Hergenrother, William Lee
195 Dorchester Road
Akron,Ohio 44313 (US)
Inventor: Schwarz, Richard Alan
2026 Bridger Road
Akron, Ohio 44312 (US)
Inventor: Ambrose, Richard Joseph
3202 Bancroft Road
Akron, Ohio 44313 (US)
Inventor: Hayes, Robert Arthur
2980 Cedar Hills Road
Cuyahoga Falls, Ohio 44223 (US)

(74) Representative: von Raffay, Vincenz, Dipl.-Ing. et al,
Patentanwälte Raffay, Fleck & Partner Postfach 32 32 17
D-2000 Hamburg 13 (DE)

EP 0 002 196 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to epoxy, urea, urethane, urethane-urea, nylon and imide copolymer compositions according to the respective preambles of claims 1, 3, 5, 7, 9 and 11 and the processes for producing these according to the respective preamble of claims 2, 4, 6, 8, 10 and 12.

In prior art U.S. Patent No. 3,838,108, the formation of various block copolymers is disclosed. However, the block copolymers disclosed there generally had to be made in one continuous process, since the anionically polymerized polymer with isocyanate or polyisocyanate end caps tended to be unstable and could not be stored for any appreciable period of time. That is, moisture or active hydrogen-containing impurities would react with the highly reactive isocyanate, forming by-products and would prevent the formation of the desired block copolymer. Moreover, in the absence of active hydrogen compounds, trimerization or dimerization of the isocyanate or isothiocyanate may occur. The requirement of a continuous polymerization is at times uneconomical and impractical, especially when tailor-made products are desired. Moreover, another disadvantage of the continuous formation of the block copolymer is that due to various parameters involved, the precise percentage of a polyolefin-type polymer end capped by an isothiocyanate or isocyanate would vary from time to time and generally was very difficult to control or to determine immediately. Such variation tended to produce block copolymers of less than optimum and sometimes undesirable properties in the situation wherein a precise stoichiometric amount of monomer or polymer was required, as in the formation of a polyimide block copolymer.

Protected amino-functional initiators and amino-terminated diene polymers and their production are already known from prior art U.S. Patent 4,015,061. With respect to amine-terminated polybutadiene polymers it is mentioned that they are useful precursors to polybutadiene-Nylon 6 block copolymers which are useful as high-impact resins. The products described there are useful intermediates for that purpose. It is also mentioned there that the amine polymers have stability and therefore can be stored and transported.

Furthermore, Applicant's U.S. Patent No. 4,070,344 (published January 24, 1978) relates to amine terminated polymers and the formation of various block copolymers which was the starting-point for the development of the present invention.

With regard to the epoxy, urea, urethane, urethane-urea and imide copolymers, however, no data concerning the specific constituents, endproducts and their utilization was indicated there. Thus, during the development, various difficulties were encountered which can be attributed to different reaction parameters, e.g. solubility behaviour etc. of the starting products and their choice.

Apart from this, the preparation conditions for the nylon block copolymers were insufficient in regarding the blowing agents to be used and the characteristics of the foams which can be produced therewith.

Further, it turned out to be disadvantageous that no structural details about the above copolymers and their starting products were known.

Therefore, it is the object of the present invention to avoid and solve the above mentioned problems and to make block copolymers from amine terminated polymers and other monomer types which possess desirable properties of both polymer blocks and make them in a way which minimizes by product and instability problems of isocyanate terminated polymer intermediate.

It is yet another object of the present invention to produce amine terminated polymers, as above, which can be reacted with a precise and accurate amount of monomers or polymers to form tailor-made block copolymers as mentioned above of very high physical properties.

These objects are solved on one hand by the epoxy, urea, urethane, urethane-urea, nylon and imide block copolymers as defined in claims 1, 3, 5, 7, 9, and 11 and on the other hand by their respective process of production as described in succeeding claims 2, 4, 6, 8, 10 and 12.

From the structural view-point, the invention clearly demands A-B-A (wherein A is the amine terminated polymer and B the epoxy polymer), P-U-P (wherein P is the amine terminated polymer and U represents the urea, urethane or urea-urethane constituent) and P-I-P (wherein P represents the amine terminated polymer and I the imide polymer constituent) type block copolymers, respectively, which are capable of being cured to give thermosetting resins.

With respect to the A-B-A epoxy copolymers the invention necessitates the use of diepoxides as given in the characterizing clause of claim 1 and 2, because mono-epoxides would only yield AB-type polymers. Surprisingly, only the A-B-A type copolymers can be used as glass fabric laminates.

With respect to the other copolymers P-U-P and P-I-P structures as well as specific compounds and data are claimed. The copolymer end products according to the invention then show extremely good processable properties at temperatures below the melting point of urea and urethane, respectively. The P-I-P types require the use of dianhydrides as described in the characterizing part of claims 11 and 12.

The invention also overcomes the solubility difficulties with the preparation of the imide copolymers in that a distinct solvent mixture is referred to in claims 11 and 12.

With respect to the nylon copolymer foam compositions and their process for production the invention provides water, pentane, hexane or heptane as blowing agent whereby the resulting

thermoset foams can be varied in their characteristics. Furthermore, when a rigid foam is desired without utilizing a coreactive monomer, a curing agent is not required. Further, it is apparent from the examples below that the polymers are not produced individually and then reacted thereafter but 'in situ' (in place) which means the formation of the second polymer in presence of a preformed first polymer and simultaneous attachment of both to give the desired copolymer.

Apart from this, the additional isocyanate to amine interconversion step interposed leads to the outstanding stability of the present amine-terminated polymers which represents a great advance over the isocyanate-terminated polymer of U.S. Patent 3,838,108. Also the field of use is greatly enhanced in comparison to the teaching of U.S. Patent No. 4,015,061 because there the amine terminated polymers are only described in connexion with nylon 6. Now the amine-terminated polymers can be stored before use, with or without other components. Their reactions are more easily controlled and yield less by-products. In turn, this means superior copolymer properties are more easily achieved.

This has been varified by the invention at least for the copolymers as mentioned in the claims.

The preparation of the end capped, anionically produced polymers will be more fully understood by referring to the following examples.

Example I
1,2-Polybutadiene

To a clean, dry, nitrogen purged, 828 $cm^3$ beverage bottle was added 600 cc of purified tetrahydrofuran and 77.6 g of butadiene. After cooling to —20°C, 1.52 cc of 1.64 molar ($2.49\times10^{-3}$ moles) n-butyllithium in a hexane solution was added and held at —20°C for 4 hrs., until the butadiene had polymerized. To this lithium polybutadiene, which was 85 percent 1,2-microstructure, was rapidly added 5.92 cc of a 1.22 molar ($7.21\times10^{-3}$ moles) toluene diisocyanate solution in toluene. The resulting polymer had an average molecular weight of 31,000.

Example II
1,4-Polybutadiene

To a clean, dry, 828 $cm^3$ beverage bottle was added 500—600 cc of purified toluene, 98.1 g of butadiene and 1.43 cc of 1.75 molar ($2.5\times10^{-3}$ moles) n-butyllithium in a hexane solution. The bottle was stirred magnetically overnight at 25°C. before rapidly adding 2.52 cc of 0.995 molar toluene diisocyanate ($2.5\times10^{-3}$ moles). This solution was stirred for 1 hr. and the product was precipitated with methanol. The resulting 1,4-polybutadiene had a viscosity average molecular weight of 56,000 g/mole and a vinyl content of about 10 percent.

The above-described polyisocyanate or polyisothiocyanate end capped polymers of the polymeric composition, according to the concepts of the present invention, are further reacted with an amide compound to give an imide-type terminated, anionically prepared polymer. Such amine terminated polymers have been found to be very stable or unreactive to moisture, impurities, and the like, and are stable for extended periods of time such as months and even years. Moreover, such amine terminated polymers can be shipped to various plants and stored before utilization. Additionally, the amine terminated compounds of the present invention are particularly suitable in processes wherein the precise stoichiometric relationship of the amine terminated compounds, with respect to reactant compounds as in the formation of block copolymers, is very important to the production of compounds which possess good physical properties. That is, due to the inherent factors involved in the production of polyisocyanate end capped, anionically prepared polymers such as elastomers, the exact amount of end capped polymers which constitutes further reaction sites are unknown at the time of production and, hence, often in a continuous process cannot be readily determined by chemical analysis until after the next succeeding reaction step has been carried out. Thus, off-grade or poor products are often unintentionally produced and are difficult to avoid in such continuous processes. In the formation of block copolymers, knowledge of the specific amount of end capped or amine terminated polymers is very important when they are reacted with acid halides, imide and urea-forming compounds or polymers.

The amides are those which, upon reaction with the isocyanate end capped polymer, produce an imide-type structure which can then be hydrolyzed. Suitable amides include amides of ammonia or primary amines, lactams, sulfonic acid amides and sultams. Therefore, amides having the formula

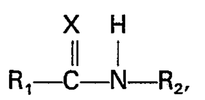

an amide of a primary amine, wherein $R_1$ and $R_2$ are preferably an aliphatic or an aromatic may be utilized along with the less desirable cycloaliphatic, as well as mixtures of aliphatic, cycloaliphatic and aromatic groups wherein $R_1$ and $R_2$ have from 1 to about 20 total carbon atoms and wherein X is oxygen or sulfur. A specific and preferred example is oleamide. Of course, $R_1$ and $R_2$ may simply be hydrogen. It is noted that amides of secondary amines, that is, N,N-disubstituted amides cannot be used since they will not react with the isocyanate end capped polymers due to the lack of a hydrogen

bonded to the nitrogen atom. Specific examples of amide compounds wherein X is an oxygen or a sulfur, $R_2$ is a hydrogen and $R_1$ is preferably a hydrogen or an alkyl include formamide, acetamide, stearamide, and the like. Examples wherein $R_1$ is preferably an alkyl or an aromatic and $R_2$ is a hydrogen or an aromatic include acetanilide, benzamide and benzanilide. Another and a highly preferred class of amide compounds are the internal or cycloaliphatic amides such as the lactams. Generally, lactams having from 3 to about 16 total carbon atoms may be utilized. Preferred lactams include caprolactam and capryllactam, that is, lactams of primary amino acids. Additionally, the sultams may be utilized. Of course, the lactams and the sultams must contain an N—H group.

Additional amide-type compounds can be utilized for the present invention wherein

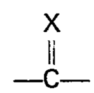

is replaced by an

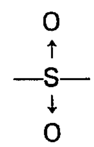

group, for example, the sulfonic acid amides. Similarly, in the lactams, the

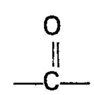

group may be replaced by

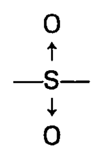

to form a sultam of a primary amino sulfonic acid. A specific example includes benzene sulfonamide. Suitable solvents for the sulfonamide compounds include hexane and tetrahydrofuran. Generally, the above amide compounds are preferred over the sulfonic acid amide and the sultam compounds.

Upon reaction of the amide-type compounds with the isocyanate or isothiocyanate end capped polymer, i.e. polymer

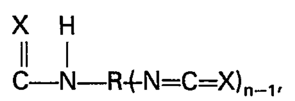

an imide-type (or acrylurea type)

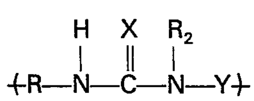

structure is produced wherein the polymer terminal structure is generally as follows: Polymer

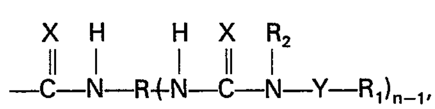

where X is oxygen or sulfur and Y is

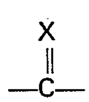

or

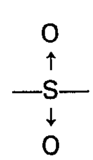

wherein R, $R_1$ and $R_2$ are as set forther above. Such terminal structure of the polymer for the purpose of the present invention, including the claims, is to be understood as an imide-type (or acrylurea type) structure and is an intermediate in the production of the amine terminated polymer.

To insure that many or most of the end capped, anionically prepared polymers are eventually converted to amine terminated polymers, generally, the mole ratio of an amide compound is desirably from about 1.0 to about 10 and preferably about 2 with respect to the unreacted isocyanate groups. The amount of polyisocyanate utilized to react with the anionically prepared polymer is generally in excess of an equivalent amount as from 1.1 to about 20 and preferably a mole ratio of about 2 to insure that most all of the anionically prepared polymers are end capped, as well as to insure that a high proportion of such end capped polymers is produced. Thus, in the case of the preferred mole ratio, the amount of amide compound to an anionically prepared polymer will be 4 to 1 where diisocyanate compounds are utilized and will be 6 to 1 where triisocyanate compounds are utilized. Thus, when a triisocyanate is utilized, the reacted polymer may be terminated with two amine groups.

The addition of the amide compound was generally carried out at a temperature range of about −78°C to about 50°C and, preferably at the range of from about 0°C to about 30°C. Of course, the temperature will generally vary according to the type of amide compound utilized. Generally, at temperatures below the lower broad limit, anionic polymerization becomes unfeasible. In the case where the particular type of amide compound is a lactam, the addition temperature of the amide is desirable at the molten temperature of the lactam.

After an imide-type terminated polymer is formed, it is hydrolyzed to produce the amine terminated, anionically produced polymer. Hydrolysis, which will generally vary depending upon the type of amide compound, may usually be carried out from −25°C to about 100°C with a temperature of about 15°C generally being preferred, especially when the amide is caprolactam.

The mole ratio of water to the imide groups is from about 1.0 to about 10 and preferably about 2. A mole ratio in excess of or larger than 1.0 is preferred, of course, to insure a large amount of amine terminated polymer and to reduce the amount of coupling occurring during hydrolysis of the imide. Thus, if the mole ratio of diisocyanate utilized is twice that of the expected anionically prepared chains, the preferred mole ratio of amide compound will be four and the preferred lower amount of water to the number of anionically prepared polymers will be eight. Of course, larger or smaller amounts may be utilized with good results. Upon hydrolysis, the amide compound is separated from the polymer and carbon dioxide is given off, thus, producing an amine terminated polymer. Generally, if the above ranges of amide compound and water are utilized, the amount of isocyanate end capped polymers converted to amine terminated polymers is usually a minimum of 60 percent although with the preferred procedure, conversions of greater than 90 percent are usually obtained.

When an excess of polyisocyanate material is employed, there will exist excess or free polyamine materials. The presence of such polyamines is usually deleterious to the properties of some of the copolymers, as for example, 1,2-polybutadiene/nylon-6 block copolymer, while in other situations, its presence may be corrected by an additional amount of reactant, as for example, additional diacid chloride when diacid chlorides and diamines are added to make nylons (in order to form the desired block copolymer). These are some of the reasons why it is generally undesirable to utilize a large excess of polyisocyanate, that is, above the preferred amount for the formation of the amine terminated polymers.

The invention will be better understood by reference to the following examples.

Example III

Amine terminated 1,4-polybutadiene

A clean, dry one-half gallon reactor fitted with a paddle-type stirrer was charged with 1500 g of butadiene-hexane blend (25 wt. percent butadiene) which had been dried to less than 50 ppm water by circulation through 3A molecular sieves. The temperature was controlled at 80°F by circulating water in the reactor jacket. Polymerization was initiated by addition of 25.0 ml of 1.55 M n-butyllithium in hexane. After a short period of exothermic heating, the reaction temperature was maintained at 80°F for 16 hrs. A sample was taken for analysis, then 10.7 ml of Hylene T (DuPont 2,4-toluene diisocyanate) was added with rapid stirring. Aliquots (300 ml of cement) were charged into five dry, nitrogen purged, 28 oz. beverage bottles containing 100 ml of dry distilled tetrahydrofuran and samples of various amides (see Table I). The polymer mixture remaining in the reactor was reacted with 5.7 g of molten caprolactam for 30 min. at 80°F and then 10 ml of distilled water was added. The polymer cement from the reactor was stabilized with antioxidants and characterized as described below. The five bottle samples were placed in the 50°C polymerization bath for the indicated times (see Table I). Completion of reaction of the amide with the isocyanate was taken to be a value of less than or equal to 0.1 for the ratio of the optical densities of the infra red absorptions for NCO (approximately 2260 $cm^{-1}$) to $CH_2$ (approximately 2850 $cm^{-1}$). The intermediate imides were then hydrolyzed by addition of 4 ml of distilled water. The overall coupling results from GPC measurements are given in Table I.

TABLE I

| Sample | Amide[a] | Reaction[b] time @ 50°C | Percent coupling by GPC[d] |
|---|---|---|---|
| 1 | Acetamide | 2 hr. | 46.0 |
| 2 | Acetanilide | 2 hr. | 9.0 |
| 3 | Benzamide | 2 hr. | 49.0 |
| 4 | Benzanilide | 2 hr. | 54.0 |
| 5 | Benzene sulfonamide | 22 hr.[c] | 79.0 |
| 6 | Caprolactam | 0.5 hr. | 37.0 |

[a]Charged at 2/1 amide/TDI mole ratio
[b]Final $NCO/CH_2$ optical density ratio $\leq 0.1$
[c]Required tertiery amine catalyst to react appreciably
[d]Determined by comparison of the GPC curve of the amine terminated polymer with that of the base 1,4-polybutadiene

Example IV
Amine terminated 1,2-polybutadiene

A clean, dry one-half gallon stainless steel reactor equipped with a paddle-type stirrer was charged with 1 kg of butadiene in hexane (50 wt. percent blend) which had been dried to less than 50 ppm water by circulation through 3A molecular sieves. The reaction mixture was cooled to —51,1°C by circulation of refrigerated isopropanol through the reactor jacket. A modifier (15.2 ml of tetramethylethylenediamine) was added to promote the formation of high 1,2-microstructure. The polymerization was initiated by the addition of 50.0 ml of 1.62 M n-butyllithium in hexane and the temperature rose to 29,4°C. Cooling was maintained and the reaction temperature was held at —28.9°C for 4.5 hr. A sample was taken for analysis of the polybutadiene (87 percent 1,2-microstructure, intrinsic viscosity of 0.205 at 25°C in toluene). Then 14.3 ml of Hylene (Trade Mark of DuPont 80/20 2,4-/2,6-toluene diisocyanate) was added rapidly with good agitation. A sample was taken for analysis and then 23.7 g of caprolactam in 125 ml of dry toluene was rapidly added. The reaction was stirred for 15 min. at —28,9°C then 30 min. at 82°C. After cooling to 10°C, 20 ml of distilled water was added followed by antioxidants. The gel permeation chromatography analysis indicated 38 percent of the polymer was coupled or 62 percent amine terminated 1,2-polybutadiene present in the product.

Example V
Pilot plant preparation of 1,2-amine terminated polybutadiene

A five hundred gallon stainless steel reactor fitted with a single contour blade turbine conforming to the reactor bottom was employed. The reactor was baffled at a level requiring 100—200 gallons of material to be effective. The reactor was cooled to approximately —17,8°C by circulating coolant through the jacket. The reactor was then charged with 163.4 kg of dimethyl ether and 4.3 kg of 15 percent n-butyllithium in hexane. A butadiene monomer, dried to less than 50 ppm water by circulation through a column packed with 3A molecular sieves, was metered into the reactor at a rate such that the temperature was maintained at 4,4°C. After an initial exotherm to 9°C, the desired temperature was maintained and a total of 90.8 kg. of butadiene was charged over 8 hrs. A sample taken after completion of the butadiene addition showed 1,2-polybutadiene of greater than 97 percent 1,2-microstructure and a dilute solution viscosity of 0.20 dl/g on a 0.5 percent solution in toluene at 25°C. To the active lithium polymer cement was added 3.6 kg of Hylene T (DuPont 2,4-toluene diisocyanate) over 2.3 min. with maximum stirring. After sampling for analytical study, 18.2 kg of 25 wt. percent caprolactam in benzene dried to less than 50 ppm water by circulation through 3A molecular sieves was charged over 5 min. The reaction mixture was diluted by the addition of about 90.8 kg of dry hexane, as the dimethyl ether was removed by distillation. Distillation was accomplished by heating the mixture at 104°C. When essentially all of the dimethyl ether and a portion of the hexane had been removed, 1.45 kg of distilled water was added and the reaction mixture was cooled, stabilized with anti-oxidants, and dropped into drums as a 54.5 percent solids cement.

Titration of the polymeric base indicated that 49.5 percent of the material was amine terminated, in good agreement with the value of 51 percent non-coupled material measured by gel permeation chromatography.

Example VI
Comparison of wood flour filled, 1,2-poly-Bd and amine terminated 1,2-poly-Bd

Samples of resin were compounded in hexane solution (40—60 percent resin solids) as indicated below. The mixing was done in a Kitchen Aid Mixer. Solvent was removed by drying in a vacuum at 50°C. Test specimens were cured 10′ at 350°F in preheated molds. The physical properties measured are tabulated below:

| Sample No. | 1 | 2 |
|---|---|---|
| 1,2-Polybutadiene | 100 | — |
| Amine terminated 1,2-PBd | — | 100 |
| Wood flour | 100 | 100 |
| Paraformaldehyde | 1 | 1 |
| Dicup 40 (Trade Mark) (40 percent dicumyl peroxide) | 7.5 | 7.5 |
| Flexural strength, kg/cm$^2$ | 431.2 | 758.8 |
| Flexural modulus, $\times 10^{-5}$ kg/cm$^2$ | 0.413 | 0.357 |
| Hardness, rockwell E | 68 | 65 |
| Izod impact, notched mkg/cm | 0,011 | 0.011 |

A significant improvement in flexural strength was noted in the samples prepared with amine terminated 1,2-polybutadiene.

The amine terminated polymers produced according to the present invention can be generally reacted with polymer forming monomers or actual polymers as cited in claims 1—12 to produce block copolymers which are generally processable at ambient temperatures and yet, upon curing, exhibit physical properties of the added polymer.

According to the concepts of the present invention, the amine terminated polymers described above can generally be reacted under various conditions with amine reactive monomers and polymers as cited in claims 1—12 to form block or graft copolymers.

Nylon

A preferred amine reactive compound is a lactam having from 3 to 15 total carbon atoms. Highly preferred lactams include caprolactam and capryllactam. When such lactams are polymerized, they will yield a nylon block copolymer which is readily processable at the processing temperature of the amine terminated polymer. Thus, when amine terminated 1,2- or 1,4- polybutadiene is used, the processing temperature will be ambient, whereas if amine terminated polystyrene is used, the processing temperature will be approximately 121.1°C to 204.4°C. However, when the butadiene portion of the nylon block copolymer is cured, the copolymer will exhibit physical properties largely representative of the nylon constituent of the block copolymer in contrast to the elastomer constituent.

Generally, the present invention contemplates the production of block copolymers from the amine terminated polymer such as block epoxy copolymers, block urethane copolymers, block urea copolymers, block urethane-urea copolymers and block polyimide copolymers.

In the production of nylon block copolymer foams, the elastomeric amine terminated polymers described above are connected to a nylon polymer as formed by the polymerization of lactams or the combination of diacid-chlorides and diamines or prepolymers thereof to give block copolymers which are readily processable and millable at ambient temperatures and possess excellent physical properties upon cure. Nylon block copolymers made utilizing nylon monomers and prepolymers are highly preferred since they tend to give better properties and are easier to prepare. The polymerization of the nylon constituent is generally via the anionic route and therefore extreme care must be taken to insure that the polymerization environment is substantially free of active hydrogen compounds such as water, alcohols, acids, and the like. Therefore, an inert atmosphere such as nitrogen is highly desirable. The required active hydrogen content in the reaction must generally be below 100 parts per million and preferably below 25 parts per million with a content below 5 parts per million being highly preferred, especially with respect to the amount of water in the polymerization system such as a reaction kettle or the like. The reaction may be carried out according to bulk or suspension polymerization techniques with bulk polymerization being preferred for lactams and suspension polymerization being preferred for diacid chlorides and diamine. Moreover, since the amine terminated polymers described above tend to be very stable with respect to moisture, impurities and the like, the block polymerization process may be carried out well after the formation of the amine terminated polymer, such as for periods of six months, a year, and the like. Of course, before the block polymerization process can be commenced, the amine terminated polymer will have to be substantially purified of active hydrogen compounds such as water as by utilizing a nitrogen purge or by heating to 50—100°C under a vacuum of less than about 5 mm of mercury.

Lactams which may be utilized in the formation of the nylon constituent having from 3 to 15 carbon atoms and preferably from 5 to 12 with caprolactam and capryllactam being highly preferred. The temperatures of the polymerization can generally range from about —50°C to about 260°C with a preferred range being from about 120°C to about 180°C. Usually, no pressure need be applied to the system and the pressure of the system will be determined by the solvent system used as well as the polymerization temperature. Desirable solvents include hexane, toluene and the like so long as they do not contain active hydrogens.

Considering the use of diacid chloride and diamines, or salts of diacids and diamines to give a nylon constituent such as nylon 6,6; 6,10; or 6,T, generally any diacid chloride and diamine compound

may be used as well known to those skilled in the art. For example, the acid chloride of adipic acid may be utilized with hexamethylene diamine. Other preferred examples of acid chlorides are the aromatic dicarbonyl chlorides containing from 8 to 16 carbon atoms such as terephthaloyl chloride. Preferred examples of diamines include aromatic compounds having from 6 to 15 carbon atoms such as m-phenylene diamine, 2,4-toluene diamine, methylene dianiline, and the like. The temperature range for copolymer preparation is usually much narrower than when utilizing lactams and generally ranges from about −20°C to about 10°C. Lower temperatures result in the diacid chloride and/or the diamine compound precipitating out of solution whereas higher temperatures than the general range tend to hydrochlorinate the amine terminated polymer constituent such as polybutadiene. Although various non-active hydrogen solvents may be utilized, dipolar aprotic solvents are preferred since they tend to pick up any hydrogen chloride formed during the polymerization. Preferred solvents include DMF (dimethylformamide), DMAC (dimethylacetamine) and HMPA (hexamethylphosphoroamide) along with an amount of toluene to maintain the amine terminated polymer in solution. The polymerization may be carried out under normal pressure conditions, that is, under the pressure generated by the solvent system at the polymerization temperatures.

Although the polymerization of lactams can be carried out with just the amine terminated polymers and monomers since the amine terminated portion of the polymer tends to act as an activator, coactivators may also be used. Toluene diisocyanat is an example of a specific and preferred coactivator. Usually, the polyisocyanates and the polyisothiocyanates can serve as activators with diisocyanates or triisocyantes preferred. Generally, any activator may be utilized as well known to those skilled in the art. Examples of additional activators are set forth in U.S. Patent Nos. 3,017,392 and 3,028,369 which are hereby fully incorporated by reference with respect to such activators. The amount of coactivator will generally depend upon the final average nylon molecular weight desirable with smaller amounts of coactivator being utilized to give higher molecular weights.

To promote polymerization of the lactams to the nylon compound, a basic catalyst is utilized such as sodium hydride, a preferred catalyst. Generally, any sodium, potassium, rubidium, lithium or alkaline-earth compound capable of forming a metal salt of a lactam may be utilized as well known to those skilled in the art.

The nylon constituent of the block copolymer may have a molecular weight range of from about 5,000 to about 50,000 with a range of from 10,000 to about 30,000 being preferred. The amount of the amine terminated constituent with respect to the nylon constituent ranges from 5 percent to 95 percent and the block copolymer will generally exhibit processing properties of the amine terminated constituent. Thus, if the amine terminated constituent is an elastomer, or more specifically, either 1,2-polybutadiene or 1,4-polybutadiene, the block copolymer may be processed accordingly. Generally, the higher the amount of the amine terminated constituent, the better are the processing properties with amounts of 20 percent and higher giving very good processing properties. A weight range of the nylon polymer constituent of from about 25 percent to about 80 percent is preferred.

The nylon block copolymer foam can be cured, that is, cross-linked through the use of conventional crosslinking agents such as organic peroxides with dicumyl peroxide being an example of a preferred peroxide.

It has been found that when a particular class of organic peroxides is used to cure the nylon block copolymers, the copolymers exhibit even further improved properties, especially when the base polymer or polybutadiene constituent has a high vinyl content. These organic peroxides can be represented by the following formula

$$CH_3C(R)_2O—OC(R)_2CH_3$$

wherein R represents aryl or alkyl including cycloalkyl, aralkyl, alkaryl, etc., of 1 to 20 carbon atoms, inclusive. Typical R groups include methyl, ethyl, propyl, butyl, hexyl, heptyl, decyl, dodecyl, octadecyl, phenyl, tolyl, xylyl, benzyl, phenethyl, naphthyl, methylnaphthyl, naphthylethyl, diphenyl, benzylphenyl, butylphenyl, cyclohexyl, cycloheptyl, cyclohexylmethyl, cycloheptylethyl, methylcycloheptyl, and the like.

The organic peroxides of the above formula may be diperoxides or mixed peroxides, that is, peroxides which have two different $CH_3C(R)_2O\cdot$ radicals. Specific examples include dicumyl peroxide, a preferred peroxide, ditertiarylbutyl peroxide, Vulcup, manufactured by Hercules ($\alpha,\alpha'$,-bis-(t-butyl-peroxy)-diisopropyl benzene),tertiarybutyl-cumyl peroxide, ditertiaryamyl peroxide, tertiarybutyl-tertiaryamyl peroxide, tertiaryamyl-cumyl peroxide, ditertiaryoctyl peroxide, bis(1,1-diphenyl-ethyl)-peroxide, bis(1,1-dicyclohexyl-ethyl)peroxide, bis(1-cyclohexyl-1-methyl-ethyl)peroxide [also known as bis(2-cyclohexyl-2-propyl)peroxide], bis(1-phenyl-1-ethyl-ethyl)peroxide [also known as bis-2(2-phenylbutyl)peroxide], and the like. The symmetrical peroxides which have identical groups on each side of the peroxy oxygens are generally more available and therefore are preferred. However, mixed peroxides, when available, can be used very satisfactorily.

Whether mixed peroxides or diperoxides of the above class are used to impart to the block copolymers' improved properties, which are generally more favorable than if ordinary peroxides other

than the above class were used, the peroxides used are advantageously those having a reasonably fast rate of decomposition at the temperature employed.

The nylon block copolymers formed when cured possess good physical properties characteristic of nylon such as impact resistance, high abrasion resistance, tensile strength and toughness, and can therefore generally be used as an engineering or structural plastic having low flammability. Desired end uses, thus, include appliance housings, cabinets, rigid panels, and the like. If the amine terminated polymer is formed from the 1,4-polybutadiene microstructure and the block copolymer has a high nylon content as in excess of 75 percent, the block copolymer may be employed as textile fibers and as tire cord similar to the use of nylon. If the amount of nylon content is lower, the 1,4-polybutadiene-nylon block copolymer can be utilized for hoses, flexible pipes, and the like. If the block copolymer contains a 1,2-polybutadiene microstructure, it can be used for casters, gears, plastic pipe, and the like. Moreover, as with nylon polymers, various conventional fillers and reinforcing agents may be added such as silica and the like. Various fibers such as wood, metal, rayon, etc., may also be added but they tend to greatly reduce the processability of the uncured polymer.

The invention will be more fully understood by reference to the following examples which describe the preparation of various polybutadiene-nylon block copolymers.

The 1,2-polybutadiene nylon block copolymers of the present invention have been found to produce good engineering rigid thermoset foams. Moreover, it has been found that such foams may possess excellent flame retardancy by proper compounding. Additional advantages of such rigid foams include the facts that they may be made from putty-like material and therefore are readily processable or moldable, they do not present dust problems, water can readily be used as a blowing agent, thereby reducing health and safety hazards of processing, and that as a thermoset, relatively low processing temperatures such as below 149°C must be utilized.

In contrast, generally all conventional thermoplastic foams require a high processing and blowing temperature. For example, polycarbonates and polyphenylene oxides require a processing temperature of about 260°C to about 320°C. Considering thermoplastics which constitute the largest class of foams utilized, the foaming temperatures of polypropylene generally range from 170°C to 290°C, and for polyphenylene sulfides from 320°C to about 345°C. Considering the strength of various thermoset foams, phenolics and urea-formaldehyde tend to be friable and, therefore weak.

Thermoset foams according to the present invention having good flame retardant properties are formed by utilizing conventional curing agents such as peroxides or with other conventional curatives, for example, various sulfur curatives, as are well known to those skilled in the art, along with suitable and conventional flame retardants, various surfactants to obtain good bubble dispersion and size, various conventional blowing agents, and various fillers or reinforcing agents. Additionally, a coreactive monomer may or may not be added to the block copolymer. The block copolymer may generally comprise a diene rubber constituent made from a monomer as set forth above, for example, from a conjugated diene monomer having from 4 to 10 carbon atoms with a preferred rubber constituent including 1,2-polybutadiene; 1,4-polybutadiene; 1,4-polyisoprene; and a copolymer of 1,4-butadiene and styrene. The nylon constituent may be made from any nylon-forming monomer as previously set forth, that is, the lactams, and preferably from caprolactam or capryllactam. The resulting thermoset foams may vary from rigid to semi-rigid as well as highly flexible, non-rigid foams by variation in the level and type of rubber curatives employed and the block copolymer composition.

Additionally, thermoplastic rigid foams may also be prepared from the various block copolymers disclosed hereinabove when the amine terminated polymer portion of the copolymer is made from monomers via an anionic polymerization such as vinyl substituted aromatics or heteroaromatics, as set forth above. Of these various monomers, styrene, alpha-methylstyrene, vinyltoluene and 4-t-butylstyrene are preferred. Such thermoplastic block copolymer rigid foams will require high processing and blowing temperatures characteristic of conventional thermoplastic foams. The nylon constituent of the rigid foams may be made from any of the above-set forth monomers with caprolactam and capryllactam being preferred. Moreover, the various compounds which may be utilized in the preparation of these rigid thermoplastic foams are the same, such as the flame retardants, the surfactants, the blowing agents, and the like. However, when a rigid foam is prepared without utilizing a coreactive monomer, a curing agent such as a peroxide type or a sulfur type is not required.

The amount of the coreactive monomer for preparation of either the thermoplastic foams or the rigid thermoplastic foams based upon 100 parts by weight of the block copolymer will be zero or nothing if a coreactive monomer is not utilized, or otherwise will range from about 1 to about 150 parts and preferably from about 1 to about 20 parts since the coreactive monomer generally decreases the viscosity of the composition. If too much coreactive monomer is utilized, the foam becomes soft or non-rigid, and exhibits reduced flame retardancy and generally lower physical properties. Specific examples of coreactive monomers include styrene, vinyltoluene, chlorostyrene, 4-t-butylstyrene, diallyphthalate, and the like.

The range of the curing agent, be it peroxide or a sulfur-type curative, is from about 1 to about 40 parts with from about 2 to about 6 parts being preferred. In general, any conventional peroxide curing agent may be utilized as well known to those skilled in the art with dicumyl peroxide being preferred. Should Dicup 40 be utilized, a larger overall weight amount is generally utilized due, of course, to the

fact that such peroxide contains only about 40 percent dicumyl peroxide by weight. Similarly, any conventional sulfur compound or sulfur cure system known to the art may also be utilized such as the following cure system.

| | [Parts/100 pts. rubber (copolymer)] |
|---|---|
| Sulfur | 2.0 pts. |
| Stearic acid | 2.0 pts. |
| Zinc oxide | 5.0 pts. |
| Santocure NS (N-t-butyl-2-benzothiazolesulfenamide) | 1.2 pts. |

Considering the flame retardant, generally from 0 to 150 parts and preferably from 50 to about 100 parts of any conventional flame-retardant compound may be utilized. Specific examples include Thermoguard S 711, M and T Chemical Company (antimony trioxide), Dow FR 300 BA (decabromo diphenyl oxide), and alumina trihydrate. Generally, amounts at the lower end of the ranges are desired since, otherwise, the density tends to increase and the various physical properties tend to decrease.

The general range of the surfactants is from 0.1 to about 5 parts with a preferred range of about 0.2 to about 2 parts. These ranges generally provide a good distribution of bubbles as well as bubble size whereas smaller amounts tend to produce a poor dispersion of cell size. On the other hand, excess amounts tend to cause collapse of the bubbles or voids. Any conventional surfactant may be utilized either alone or in combination with each other and a specifically preferred surfactant is SF 1034, a silicone surfactant manufactured by General Electric Company.

The range of the blowing agent to produce the foam is from 0.5 to 50 parts by weight and preferably from 5.0 to about 20 parts per 100 parts of block copolymer. Many conventional blowing agents may be utilized. Generally, for thermoset copolymer foams, high decomposition temperatures for effective gas yield wherein the decomposition temperature is 150°C or over are not preferred and compounds having a decomposition temperature of 175°C and over tend to be incompatible with the process.

Generally the physical blowing agents which are used for thermoset foams are those which are compatible or dispersible within the resin formulation and do not interfere with the free radical cure of the resin and are; pentane, hexane, heptane or water. The physical blowing agents which are preferred for thermoplastic copolymer foams are generally those cited above for thermoset copolymer foams.

The general range of the fillers or reinforcing agents is from about 0 to about 150 parts and preferably from about 0 to 50 parts. Usually, amounts in excess of these ranges are not desirable since the formulations are rather stiff and do not readily flow under the internal gas pressure to give good foams. Various conventional fillers, well known to those skilled in the art, may be utilized such as silica, alumina, chopped glass fibers, and the like.

The flame retardant rigid foam utility of the 1,2-polybutadiene nylon block copolymers will be better understood from the following examples and data.

Example VII

| | |
|---|---|
| 1,2-PBd/Nylon-6 33/67 | 100 pts. |
| Vinyltoluene | 10 pts. |
| Dicup R | 4 pts. |
| Thermoguard S711 ($Sb_2O_3$—M & T Chemical) | 10 pts. |
| FR 300 BA (Decabromo Diphenyloxide, Dow Chemical Company) | 20 pts. |
| Alumina trihydrate | 50 pts. |
| Nitrosan (Dupont)* | 2 pts. |
| SF1034 (Silicone Surfactant, G.E.)** | 1 pt. |

*N,N'-dimethyl-N,N'-dinitroso-terephthalamide
**Dimethylpolysiloxane and polyoxyalkylene copolymer

The above formulation was thoroughly mixed and 50 g of the formulation was cured in a cylindrical mold under atmospheric pressure. The sample was heated at 120°C for 40 min. and then at 177°C for 5 min. to rapidly cure the 1,2-polybutadiene portion. The resulting free rise, rigid foam had a density of approximately 0.85 g/cc and floated in toluene. A thin slice (0,16×0,24 cm thick) of the foam would burn when held in the flame of a Meeker burner but self-extinguished upon removal from the flame. The slice did not drip either in the flame or after removal from the flame.

In a similar formulation, wherein an amount of the block copolymer containing an equilibrium concentration of water, was compounded 2 parts of Dicup R. A 40 g sample was heated in a cylindrical mold for 2 hrs. at 149°C. The resultant foam had a density of approximately 0.8 g/cc and contained an even distribution of fine cells.

Example VIII

In a manner similar to Example X, the following formulation was cured at 149°C for 60 min. in a 7,62×2,54×0,635 cm mold.

| | |
|---|---|
| 1,2-PBd/Nylon-6 33/67 | 100 pt. |
| Styrene | 25 pt. |
| Dicup R | 5 pt. |
| 1/32″ milled glass fiber | 31.25 pt. |
| G.E. SF1034 | 0.75 pt. |
| Z6075 silane | 0.5 pt. |
| Nitrosan | 0.8 pt. |

The density was approximately 1.1 g/cc. The thermoset foam exhibited a Rockwell M hardness of 54, a flexural modulus of $0{,}3\times10^5$ kp/cm$^2$ and a flexural strength of 432,4 kp/cm$^2$.

Example IX

In a manner similar to Example XI, the following formulation was heated in a 7,62×2,54×0,635 cm mold for 60 min. at 149°C to produce a thermoset foam having a density of approximately 0.62 g/cc. This foam gave a Rockwell R hardness of 40, a flexural modulus of $0{,}08\times10^5$ kp/cm$^2$ and a flexural strength of 159,6 kp/cm$^2$.

The formulation was as follows:

| | |
|---|---|
| 1,2-PBd/Nylon-6 33/67 | 100 pt. |
| Styrene | 25 pt. |
| Dicup R | 5 pt. |
| G.E. SF1034 | 0.75 pt. |
| Nitrosan | 0.8 pt. |

As apparent from these examples, self-extinguishing or non-burning rigid thermoset foams were produced having good physical properties.

Epoxy copolymers

As previously noted, the above-described amine terminated polymers can be readily reacted with epoxy-forming monomers or prepolymers as cited in claim 1 and 2 to yield block copolymers. That is, if the amine terminated polymers are reacted with solely epoxy-forming monomers or with solely epoxy prepolymers, typically containing epoxide end groups such as acid generated epoxy compounds, the end portion of the amine terminated polymer will react with the epoxide end groups and form a block copolymer, of the ABA-type structure wherein A is the amine terminated polymer. As well known to those skilled in the art, the epoxy curing agents add to the epoxy ring generating a hydroxyl group which can then further react with more epoxy groups to extend the molecular weight. Of course, the presence of poly-epoxy compounds will result in the production of a highly branched and eventually crosslinked material. The amine terminated polymer, by virtue of its primary amine group, is a curing agent for epoxy compounds and will, thus, be bound to the epoxy resin constituent. Generally, unless exceedingly large amounts of an epoxy curing agent are utilized, the resulting composition will contain a mixture of epoxy graft copolymers, epoxy block copolymers, as well as epoxy copolymers which have blocked to at least one end thereof an amine terminated polymer, as well as amine terminated polymers grafted onto at least one point of the epoxy copolymer backbone.

The amine terminated epoxy polymer compositions, whether block, graft, or mixtures thereof, are very readily formed simply by adding the amine terminated polymers to epoxy prepolymer resins and mixing at a temperature above the softening temperature of the epoxy resin, as from about ambient temperature to about 200°C, or at room temperature in a solution. Alternatively, the epoxy resin may be formed *in situ* by adding amine terminated polymers to epoxy forming monomers along with any other desirable additives such as epoxy catalysts, epoxy curing agents, and the like. Generally, the *in situ* epoxy polymerization, as well as the reaction between the epoxy prepolymers or resins and the amine terminated polymers, proceeds at ambient temperatures. Heat may be applied to increase the reaction rate as well as to cure the epoxy polymers. A suitable temperature range, therefore, extends from ambient temperatures to about 200°C with a preferred range being from about 50°C to about 150°C. The amount of epoxy polymer based upon the total weight of the copolymer composition, that is without any crosslinking, may range from as little as 1 percent by weight up to about 95 percent by weight with from about 2 percent to about 75 percent being preferred and is readily controlled simply by adding a desirable amount of epoxy-forming monomers or epoxy copolymer resins of a known equivalent weight to a desired or calculated amount of amine terminated polymer. Although the epoxy copolymers are readily processable at ambient temperatures in that they may be milled, extruded, injection molded, and the like, upon curing, they generally exhibit the physical properties of cured epoxy polymers. Thus, copolymers having a very low content of epoxy resin therein, such as 1 percent or

more, exhibit good adhesion properties whereas copolymers having a very high amount of epoxy resin, such as 80 or 90 percent, exhibit high impact strength. Copolymers having an epoxy content between the values, vary accordingly in their physical properties.

The properties will also tend to vary a bit with regard to the polymer constituent of the amine terminated polymer. Although any of the polymers may be utilized as set forth above, amine terminated polymers made from conjugated dienes having from 4 to 12 carbon atoms and desirably from 4 to 8 carbon atoms are preferred with butadiene and isoprene being highly preferred. Additionally, vinyl substituted aromatic compounds are also preferred with specific preferred examples of monomers being styrene, vinyltoluene, alpha-methylstyrene and 4-t-butylstyrene. Additionally, copolymers made from the conjugated dienes and the vinyl substituted aromatics are also desirable with a highly preferred copolymer being from styrene and butadiene. When a flexible amine terminated polymer is utilized such as 1,4-polybutadiene with a high amount of epoxy resin constituent such as 75—95 percent, the copolymer cured through the epoxy segments exhibits good impact resistance and flexibility. In contrast, when the amine terminated polymer constituent is easily cured to a rigid network such as 1,2-polybutadiene, the epoxy copolymer may be cured in both of its constituent phases to give a hard, rigid, thermoset plastic. If the amine terminated polymer constituent is prepared from thermoplastic-type monomers, such as vinyl substituted aromatics and vinyl substituted heteroaromatics, the epoxy copolymer can be cured in the epoxy constituent phase and the resultant cured copolymer will contain thermoplastic domains which will act predominantly as reinforcing fillers at temperatures up to the softening point of the thermoplastic amine terminated polymer.

If the epoxy constituent of the copolymer is formed *in situ*, suitable amounts of conventional catalysts and curing agents may be utilized. For example, based upon 100 parts by weight of the epoxy polymer, from 0.1 to 4.0 parts of a curing agent may be used. Typical curing agents include polyamides, polysulfides, urea and phenol-formaldehyde, as well as polyamines, and preferably polycarboxylic acids or acid anhydrides. Examples of common or conventional curing agents are set forth in the *Handbook of Epoxy Resins* by Lee & Neville, *Supra.*, particularly in Chapters 5 through 12 which are hereby fully incorporated by reference. Examples of specific and desirable agents include Nadic methylanhydride (methyl-2,3-dicarboxy[1 · 2 · 2]bicycloheptene anhydride), phthalic anhydride, maleic anhydride, succinic anhydride, pyromellitic dianhydride, benzophenonetetracarboxylic dianhydride, trimellitic anhydride, hexachloro-2,3-dicarboxy[1 · 2 · 2]bicycloheptane anhydride; the polymethylene diamines [e.g., $H_2N—(CH_2)_n—NH_2$], wherein n is 2 to 15 and preferably 2 to 6: xylene diamines: polyamines from ethylene imide [e.g., $H_2N—(CH_2CH_2NH)_n—CH_2CH_2NH_2$], where n is 2 to 15, with an n value of 2 to 5 being highly preferred, m-phenylene diamine, 4,4′-methylene dianiline, diaminodiphenylsulfone, hexamethylene tetramine, dimethylol urea, urea-formaldehyde resins, melamine, and phenol-formaldehyde resins. The cure, as set forth in Lee and Neville, generally occurs through coupling or condensation reactions of any of the hydroxyl groups contained in the backbone of the formed epoxy polymer.

Conventional catalysts may be utilized to promote the *in situ* polymerization of the epoxy-forming monomers, such as benzyl dimethylamine; 1,4-diaza[2 · 2 · 2]bicyclooctane, tri-n-alkanol amines with triethanolamine [$N—(CH_2CH_2OH)_3$] being highly preferred, Lewis acid and complexes thereof, and complexes of $BF_3$ (e.g., $BF_3$, diethyl ether). Moreover, any of the catalysts may be utilized which are set forth in Lee and Neville, *Supra.*, Chapter 13, which is hereby fully incorporated by reference. Various conventional additives may be utilized such as various colorants, diluents, flexibilizers, stabilizers, fillers, and the like. Conventional fillers include glass powders, metal powders, various silicas, and fibers to which the epoxy materials have good adhesion and produce composites with excellent physical properties. If desired, carbon black may be added. Moreover, various coupling agents may be used in conjunction with the fillers. Examples of specific silanes include N-beta(N-vinylbenzylaminoethyl)-gammaaminopropyltrimethoxysilane hydrogen chloride, 3-chloropropyltrimethoxysilane, 3-glycidoxypropyltrimethoxysilane, N-(2-aminoethyl-N′-2-aminoethyl)-3-propyltrimethoxysilane, and vinyltriacetoxysilane.

Generally, the preparation or addition of the various compounds, curing agents, catalysts, fillers, and the like, may take place in a suitable mixing vessel such as a Brabender or the like wherein the various compounds are simply mixed, with the formation of the copolymers being carried out at ambient temperatures, if desirable. In accordance with generally accepted procedures for the preparation of epoxy polymers, there is no need for solvents although, if desired, a non-polar solvent such as toluene may be utilized. After mixing, the toluene is generally stripped as by heating or applying a vacuum.

Although a chemical bond between the amine group and the epoxide group is formed during the preparation of the copolymers, discontinuous phases do exist between the generally polar epoxy portion of the polymer and the generally non-polar amine terminated portions such as a rubber or vinyl compound. However, the compatibility of the two phases is generally good.

In addition to the epoxy cure, common and conventional curing agents may be utilized to crosslink a rubber-type amine terminated polymer. Thus, sulfur compounds, organic peroxide compounds such as dicumyl peroxide, and the like, may be utilized to cure the amine terminated polymer when it is made from the preferred rubber-type monomers. Generally, a curing agent is selected such that it cures

in the same general temperature range as the epoxy curing agent. Of course, due to the highly crosslinking nature of the epoxy copolymers with crosslinks establishing through both the amine polymer as well as the epoxy polymers, the final product is highly gelled and, hence, is a thermoset resin.

The epoxy copolymer may generally be used in the same applications as epoxy polymers, such as surface-coating materials, wherein toughness, adhesion and chemical resistance are required, with fillers such as glass fibers to make glass fiber-reinforced articles for electrical insulating items and the like. In addition to casting, potting, encapsulation and embedment techniques as practiced with epoxy resins, the copolymers, due to their great ease of processability at ambient temperatures, may also be used for extruding, injection molding, blow molding, and the like.

The invention will be better understood by the following examples.

A copolymer of an amine terminated 1,2-polybutadieneepoxy resin was prepared by mixing 16 g of Shell Epon 1004 epoxy resin with 100 g of an amine terminated 1,2-polybutadiene (prepared as set forth in Example V) at 90—100°C for 30 mins. Based upon the amine content of the amine terminated 1,2-polybutadiene and the equivalent weight of the Epon 1004, there were two epoxy groups charged for each amine present. This copolymer (Dienoxy A) was then utilized in the formation glass fabric laminates and in the preparation of a 1,2-polybutadiene graft epoxy copolymer.

Glass fabric laminates

The following procedure was utilized to prepare glass fabric laminates.

A dip was prepared by dissolving the indicated 1,2-polybutadiene resin in toluene to give 30 percent solids. The dicumyl peroxide was dissolved at this time. The below-identified silane coupling agent was added and dispersed in the dip by shaking. Strips of glass fabric (Burlington 7781) were cut 7,62 cm wide by 96,52 cm long with the warp threads (strong direction) running across the narrow dimension. The glass fabric strips were weighed, then passed slowly through a shallow trough containing the dip. The excess dip was removed by wiping the impregnated fabric strip with parallel aluminum rods separated by a 0,2 cm gap. After air drying to remove most of the solvent, the impregnated fabric strips were dried in vacuo at room temperature for 3 hrs. Test specimens were molded by laminating ten plies of "prepreg" with all warp threads laid in parallel. The samples were cured 6 min. at 177°C in a preheated positive pressure mold. The flexural test samples were cut from the cured laminate such that the warp direction ran the length of the sample.

TABLE II

| Sample no. | 1 | 2 | 3 | 4 | 5 | 6 |
|---|---|---|---|---|---|---|
| 1,2-polybutadiene (pts) | | 100 | | 100 | | 50 |
| 1,2-polybutadiene-co-styrene (pts) | | | | | 100 | 100 |
| Amine terminated 1,2-polybutadiene (pts) | | | 100 | 50 | 50 | |
| Dienoxy A (pts) | 100 | 50 | | | | |
| Silane, Dow Corning No. | Z6020* | Z6020* | Z6040* | Z6040* | Z6040* | Z6075* |
| ,(pts) | 2.0 | 2.5 | 2.0 | 2.5 | 2.5 | 2.5 |
| Dicumyl peroxide | 2.0 | 3.0 | 2.0 | 3.0 | 3.0 | 3.0 |
| Flexural strength $\times 10^{-3}$ kg/cm$^2$ | 0,64 | 0,52 | 0,519 | 0,498 | 0,57 | 0,498 |
| Flexural modulus $\times 10^{-6}$ kg/cm$^2$ | 0,314 | 0,316 | 0,315 | 0,299 | 0,307 | 0,293 |
| Gardner Impact, cmkg | 4,03 | 2,42 | 2,875 | 2,645 | 3,335 | 2,875 |
| Hardness, Rockwell E | 104 | 104 | 103 | 100 | 100 | 98 |

*Z6020— N-(2-aminoethyl)-3-aminopropyltrimethoxysilane
*Z6040— 3-glycidylpropyltrimethoxysilane
*Z6075— vinyltriacetoxysilane

Epoxy copolymers

By use of the Dienoxy A copolymer described above, a 1,2-polybutadiene epoxy copolymer composition of approximately 33/67 composition was prepared and both the epoxy constituent and the polybutadiene constituent were cured. It should be noted that the blend of Dienoxy A copolymer with the additional diglycidylether of bisphenol A (DGEBA) and the anhydride curative system formed a stable dispersion while a blend of 1,2-polybutadiene with DGEBA and the anhydride curative system rapidly separated into two phases.

33/67—1,2-Polybutadiene/epoxy resin copolymer

The indicated quantites of Dienoxy A and DGEBA were mixed together at 95—110°C using a Cowles dissolver. After cooling to 75—80°C, the required Dicumyl peroxide and anhydride curatives were mixed in again using the Cowles dissolver. Mixing time, after the addition of the curatives, was less than 15 min. Samples were cured 4 hrs. at 85°C followed by 16.5 hrs. at 145°C to insure cure of both constituents.

Compounding of 33/67—1,2-Polybutadiene/epoxy resin copolymer

| | |
|---|---|
| Dienoxy A (see above) | 116 parts |
| DGEBA | 100 |
| Nadic methyl anhydride (Trademark) | 85 |
| Benzyl dimethylamine | 2 |
| Dicumyl peroxide | 2 |

Physical properties of cured 33/67—1,2-polybutadiene/epoxy copolymer

| | |
|---|---|
| Flexural Strength$\times 10^{-3}$ kg/cm$^2$ | 0,769 |
| Flexural modulus$\times 10^{-5}$ kg/cm$^2$ | 0,199 |
| Izod, Notched mkg/cm | 0,02 |
| Izod, Unnotched mkg/cm | 0,23 |
| Gardner Impact cm/kg | 4,025 |
| Hardness, Rockwell | E41 |

Urea

The stable amine terminated polymer of the present invention can be readily reacted with urea polymers having an active isocyanate end group or with urea forming monomers to produce copolymers of the P-U-P wherein U is the urea polymer constituent and P is the amine terminated polymer constituent. Such block copolymers generally exhibit extremely good processable properties at temperatures below the melting temperature of the urea constituent polymer and often times at ambient temperatures.

The reaction between the amine end group of the amine terminated polymer and the isocyanate group of either the urea forming monomers or the urea polymer having a free isocyanate end group thereon, generally occurs spontaneously and at room temperature. The rate of forming the chemical bond between the two constituents of the block can, of course, be readily increased by heating to any suitable temperature such as to approximately 150°C. Various urea block copolymers can be tailor-made simply by controlling the amount of the urea-forming monomers or the urea polymer added to the amine terminated polymer. Generally, suitable polymers are produced wherein the urea block copolymer contains from 5 percent to 95 percent by weight of urea based upon the total weight of the block copolymer and preferably from about 25 percent to about 75 percent by weight. In such block copolymers, the favorable properties of polyurea such as high modulus are usually retained. Such block copolymers may contain various additives, colorants, fillers, antioxidants, etc., and the like, as well known to those skilled in the art. For example, the urea block copolymers may be filled with carbon black, silica, etc. The reaction is desirably carried out in any suitable solvent such as toluene, hexane, tetrahydrofuran, and the like.

The urea constituent of the block copolymer is prepared by reacting a polyisocyanate with a diamine or water. Generally, the diamines are preferred since reaction with water proceeds at a slower rate and requires the use of a catalyst. The polyisocyanate or the polyisothiocyanate has the same formula as set forth above with regard to the formation of the amine terminated polymer and, preferably, in order to avoid crosslinking and the formation of a gel, is a diisocyanate or a diisothiocyanate. Of the various aliphatic types of diisocyanates, the alkyl, cycloalkyl, and aromatic-alkyl are preferred. Suitable diamines are represented by the formula $H_2N—R—NH_2$ where R is an aliphatic, preferably an alkyl containing from 2 to about 20 carbon atoms, a cycloaliphatic, preferably a cycloalkyl containing from 4 to about 20 carbon atoms, or an aromatic containing from 6 to about 20 carbon atoms, or combinations thereof. Examples of specific diamines include ethylenediamine, tetramethylenediamine, pentamethylenediamine, ortho-phenylenediamine, paraphenylenediamine, 2,6-toluenediamine, 4,5-diethyl-ortho-phenyldiamine, and meta-xylylenediamine. Preferred diamines include hexamethylenediamine, meta-phenylenediamine, 2,4-toluenediamine, methylene-bis(ortho-chloroaniline), i.e., MOCA and methylene dianiline.

The amount of diamine utilized with regard to the polyisocyanate or diisocyanate generally varies on an equivalent basis from about 0.8 to about 1.2, with a preferred range being from about 0.95 to about 1.05. These ranges include any available polymeric amines and polyamines remaining from the amine terminated polymer synthesis. Should the equivalent ratio be below the general range or above it, usually some P-U type area block copolymers will be formed along with free polyurea, especially if the equivalent ratio is greatly above or below. Of course, the amount of diisocyanate utilized along with the diamine or water can vary so that upon a stoichiometric basis as well as a kinetic basis the molecular weight of the polyurea constituent ranges from 1,000 to 40,000 with the preferred range being from about 5,000 to about 25,000. Since diisocyanate compounds are very reactive, generally the urea polymers formed are formed *in situ*. In any event, it is important that the formation of the block copolymers be carried out in an environment substantially free from active hydrogens such as alcohols, acids, and the like; and thus an inert atmosphere may be used such as nitrogen, helium, argon, and the like. Of course, since water is generally an active hydrogen compound, it is thus an exception of the foregoing when it is utilized in the formation of the polyurea polymer. Should diamines be utilized as well as water, the diamines are added first in an inert atmosphere followed by the addition of water.

The temperature range of the polyurea polymerization is generally from 0°C to about 260°C and preferably from about 70°C to about 180°C. The reaction when diisocyanates (or polyisocyanates) and diamines are utilized is rapid and does not require a catalyst. However, since the urea block copolymer formed is a heterogeneous mixture, the viscosity of the solution will influence the reaction rate such that a catalyst may be desired. Due often to the increase of the viscosity of the system upon polymerization, the urea block copolymer generally exists in a suspension. The urea block copolymer, however, may be readily coagulated and precipitated by a compound which is not a solvent for the amine terminated portion of the block copolymer, such as methanol.

When water is utilized in the formation of the polyurea constituent, catalysts are often desirable and are well known to those skilled in the art. Generally, such catalysts are the same as used in the formation of urethane polymers set forth below and include tertiary amines. They are used in proportion to their base strength, except when steric hindrance interferes, and a suitable amount is usually from about 0.01 to about 1.0 parts per 100 parts of urea-forming monomers. A preferred catalyst is triethylenediamine(1,4-diazo[2 · 2 · 2]bicyclooctane), which is more powerful than would be predicted from its base strength due probably to its reduced steric hindrance. Another class of catalysts are the metallic compounds which generally are powerful enough as the catalyst to promote a "one-shot" process. Of the various members of this class, the organotins are favored. Specific examples of suitable organotins include tetra-n-butyltin acetate, n-butyltin trichloride, trimethyltin hydroxide, dimethyltin dichloride, and tributyltin acetate. A preferred organotin is dibutyltin dilaurate.

The polymeric amine constituent of the urea block copolymer may be made from any of the monomers set forth above. However, preferred monomers include the dienes containing from 8 to 12 carbon atoms and preferably from 4 to 8 carbon atoms, vinyl substituted aromatics containing from 8 to 20 carbon atoms, and copolymers made therefrom. Preferred monomers of these groups include butadiene, isoprene, vinyltoluene, styrene, and 4-5-butylstyrene, and a copolymer made from butadiene and styrene, that is, SBR or styrene-butadiene rubber. Thus, when the amine terminated polymer constituent is 1,4-polybutadiene, polyisoprene, or the like, the urea block copolymer may be used as tire rubber or as an adhesive for bonding rubber to urethanes. Additionally, such block copolymers can be reinforced with carbon black, silica, and the like. When the amine terminated polymer constituent is 1,2-polybutadiene, the copolymer, upon cure, yields a hard plastic; however, when the amine terminated polymer constituent is a thermoplastic such as polystyrene, the resulting urea block copolymer acts as a thermoplastic. When the amine terminated polymer constituent is rubber, the block copolymers may be cured in any conventional manner utilizing conventional cure systems of the amine terminated constituent and generally have properties similar to a reinforced or filled amine terminated polymer. Typical uses of the urea block copolymers are numerous and the same as those generally for polyureas or filled amine terminated polymers. Additionally, when the amine terminated polymer constituent is rubber, specific uses include tires, belting, hose and molded goods. Regardless of the nature of the base polymer constituent, the block copolymers, as noted, also have remarkably improved processability below the melt temperature of the urea constituent.

The invention will be more fully understood by reference to the following examples.

Example X

A 500 ml resin kettle was fitted with a paddle stirrer, a nitrogen inlet, a septum, and a condenser, topped by a pressure relief bubbler. To 100 g of toluene was added a 60 g portion of 1,2-$PBdNH_2$ (Example V). The toluene was stirred to dissolve the resin. A 0.5 g portion of aluminum stearate (anhydrous) was added and stirred to dissolve. Then, 69.3 ml (84.7 g; 0.487 mole) of Hylene TM (80/20 2,4/2,6-toluenediisocyante) was added through the septum via a syringe. A 0.1 ml portion of dibutyltin dilaurate was added as a catalyst for urea formation. Urea formation occurred rapidly upon the addition of 50.0 ml (55.0 g; 0.509 mole) of molten (100°C) m-phenylene diamine. Stirring was continued for 5—10 seconds when the entire mixture solidified. Reaction in the solid phase was permitted to continue for 72 hrs. at ambient temperatures. The material was dried in vacuum to give

205.0 g of crumbly, tannish powder which darkened upon exposure to air (oxidation of excess amine). The material was sheeted out on a two-roll mill. The resulting polymer was pliable and had a glossy surface. A portion of the milled polymer was compounded on the mill according to the formulation given below. Even with 150 phr of silica, the copolymer remained pliable (like tough leather) and smooth surfaced.

The samples were cured 20 min. at 177°C the physical properties are given below.

Compound recipe

| | |
|---|---|
| 50.0 g 30/70—1,2-PBd$NH_2$/TDI—MPDA | (100 pt.) |
| 75.0 g 325 mesh silica | (150 pt.) |
| 1.0 g Dicup R | (2.0 pt.) |
| 0.75 ml Z6075 Silane | (1.5 pt.) |

Physical properties of cured compound

| | |
|---|---|
| Flexural strength$\times 10^{-3}$ kg/cm$^2$ | 0,624 |
| Flexural modulus$\times 10^{-5}$ kg/cm$^2$ | 1,638 |
| Izod, notched, mkg/cm | 0,0149 |
| Gardner Impact, cmkg | 0,725 |
| Hardness, Rockwell | E80 |

Urethane

The amine terminated polymers are readily and easily reacted with urethane polymers, urethane prepolymers, or urethane forming monomers to form urethane block copolymers. Thus, the stable amine terminated polymer described above may be stored until required and then reacted at ambient temperatures or at temperatures from about 20°C to about 150°C with urethane-forming monomers or the prepolymer to produce an *in situ* polymerization of the urethane polymer constituent. Alternatively and less desirably, the urethane-forming monomers or prepolymers may be polymerized, and then reacted with the amine terminated polymer within the same temperature range. The urethane block copolymer is of the P-U-P type where P represents the amine terminated polymer and U represents the urethane polymer constituent. Additionally, urea-forming monomers may be utilized in association with the urethane polymers or urethane forming monomers and prepolymers to produce urethane-urea copolymers or block copolymers also of the P-U-P type structure. The urethane block copolymer, as well as the urethane-urea block copolymer, generally exhibits good or improved processability at temperatures below the melt temperature of the urethane constituent or the urethane-urea constituent and may be utilized in a great number of applications as a thermoset upon cure.

The urethane polymer constituent of the block copolymer generally contains a significant number of urethane groups to impart urethane-type properties to it. Generally, the urethane constituent is prepared by reacting a polyisocyanate with any of a number of conventional polyhydroxy compounds which contain at least two hydroxyl groups. Of course, the hydroxyl groups may either be end groups or located on the backbone of the compound. The polyisocyanates have the same formula as set forth above with regard to the formation of the amine terminated polymer and, thus, may be a polyisocyanate or a polyisothiocyanate, in which case, a thiourethane block copolymer is formed. As in the description of the preparation of the urea polymer constituent, diisocyanates are preferred in order to avoid gels, and the R group is an alkyl group having from 2 to 20 carbon atoms, a cycloalkyl group having from 4 to 20 carbon atoms, an aromatic having from 6 to 20 carbon atoms, or combinations thereof. Preferred diisocyanates for use in the preparation of the urethane polymer constituent or the urethane-urea polymer constituent are the same as those set forth above with regard to the discussion of the urea polymer constituent or for the preparation of the amine terminated polymer.

Examples of polyhydroxy compounds which, of course, generally contain an active hydrogen include the di- and polyhydric alcohols such as the di- and polyhydric phenols, the polyether polyols such as the polyether diols, the polyester diols, the polylactone diols, the phenol-aldehyde novalacs, and castor oil. Compounds containing groups such as amino and carboxyl may be used. Thus, a typical urethane block copolymer may contain, in addition to the urethane groups in the urethane constituent, aliphatic and aromatic hydrocarbon residues, ester, ether, amide, and urea groups.

Suitable di- and polyhydric alcohols which may be reacted with polyisocyanates include the conventional alcohols which are commonly used in the formation of urethanes and, in general, the di- and polyhydric alcohols such as the alkylene polyols having from 2 to 30 carbon atoms, the cycloalkyl polyols having from 4 to 30 carbon atoms, and the alkanol or cycloalkanol substituted aromatic compounds having from 8 to 30 carbon atoms. Specific examples include $\alpha,\alpha'$-dihydroxyxylenes, 1,3-dihydroxytetraline, and 1,4-dihydroxytetraline. Specific examples of dihydric alcohols or alkylene polyols include primary and secondary alkyl diols having from 2 to 6 carbon atoms such as ethylene glycol; 1,2-propanediol, 1,3-propanediol; 1,2-butanediol; 1,3-butanediol; 1,4-butanediol; 1,5-pentanediol; 1,6-hexanediol; 2,3-hexanediol; 2,5-hexanediol; and 3,4-hexanediol. Examples of a specific cycloalkyl alcohol or a cycloalkyl polyol include 1,4-dimethylol cyclohexane; 1,2-cyclopentanediol; 1,4-cyclohexanediol; or 2,2-bis(4-hydroxycyclohexane)propane (hydrogenated bis-phenol

A). Specific examples of alkylene polyols include glycerol; 1,2,6-hexanetriol; sorbitol; mannitol; pentaerythritol; and 2-ethyl-2-hydroxymethyl-1,3-propanediol.

Generally, any of the polyether polyols such as the polyether diols which are used in the formation of urethanes may be reacted with polyisocyanates to form the urethane polymer constituent of the block copolymer. Such compounds include the polyether polyols prepared from cyclic ethers having from 2 to 8 carbon atoms, preferably from 2 to 4 carbon atoms, and the polyether polyols prepared from substituted cyclic ethers having from 2 to 8 carbon atoms in the ring such as the substituted ethylene oxide ethers (formula No. 5), the substituted oxirane ethers (formula No. 7) and the substituted tetrahydrofurans. The substituted "R" group of the above ether ring compounds is the same as set forth with regard to formula 5 and 7, except that the "R" group may contain up to 20 carbon atoms. That is, "R" may be an alkyl having from 1 to 20 carbon atoms, a cycloalkyl having from 4 to 20 carbon atoms, an aromatic ring (i.e., phenyl), or a substituted aromatic ring wherein said substituted group is an alkyl having from 1 to 20 carbon atoms or a cycloalkyl group having from 4 to 20 carbon atoms. Examples of polyether polyols made from cyclic ethers include compounds preferably derived from propylene oxide and/or ethylene oxide, and to a much lesser extent, those derived from styrene oxide, formula No. 5, and from the above-mentioned alkylene polyols. Additional examples include the polyether polyols made from the poly(oxypropylene) triols, the polyethers which have greater than three hydroxy groups such as those made from the polyols of mannitol and pentaerythritol, and from the substituted oxirane ring such as 3,3-dimethoxycyclobutane, 3,3-diethyloxycyclobutane, and 3,3-methylethyloxycyclobutane. A highly preferred group of specific polyether diols are the polytetramethyleneoxide glycols which, of course, are prepared by the polymerization of tetrahydrofuran.

Generally, the various polyhydroxy compounds set forth immediately above, that is, the various diols and polyols, the di- and polyhydric alcohols, the various polyether polyols such as those prepared from cyclic ethers as well as those prepared from the specifically disclosed cyclic ethers, have an equivalent weight of from about 100 to about 5,000. Preferably, the molecular weight per hydroxy group of the polyhydroxy compound will range from about 200 to about 1,000.

The polyester diols constitute yet another class of polyhydroxy compounds which may be used to form the urethane polymer constituent of the block copolymer and generally any polyester which is used in the formation of urethane polymers may be utilized. Typical monomers used to prepare polyesters for the urethane polymer constituent include adipic acid or phthalic anhydride condensed with any of the alkyl diols listed above having from 2 to 6 carbon atoms. For the preparation of branched polyesters, triols such as glycerol, 1,2,6-hexanetriol, trimethylolpropane, that is, 2-hydroxymethyl-2-methyl-1,3-propanediol, may be used; and to a lesser extent, the various polyols such as sorbitol, mannitol and pentaerythritol. As apparent to one skilled in the art, it is desirable to use polyesters which contain only hydroxyl groups as reactive sites and, hence, polyesters which have very low acid numbers and very low water content are preferred.

The polylactone diols constitute yet another class of polyhydroxy compounds which may be used to form the urethane polymer constituent of the block copolymer. The lactones used in the preparation of the polylactone diols contain at least 3 carbon atoms and generally up to 15. Examples of specific lactones include caprolactone and capryllactone. The polylactone diols made from caprolactone are preferred in the present invention.

Generally, the equivalent ratio of the polyisocyanate or polyisothiocyanate compounds which are reacted with the polyhydroxy compounds to form the urethane polymer constituent is from about 0.8 to about 1.2. A preferred equivalent ratio is from about 0.95 to about 1.05. Of course, the isocyanate will also react with the amine group of the amine terminated polymer. However, since the number of hydroxyl end groups of the polyhydroxy compounds are large in comparison to the amine groups, these ratios are still valid when based upon the amount of both the hydroxyl end groups and the amine end groups. The actual equivalent ratio may vary above these ranges or below them. Generally, the further away the equivalent ratio is from the desired equivalent ratio, the more P-U type block copolymers are formed along with free polyurethane. On the other hand, if polyisocyanate monomers such as triisocyanates are utilized, the resulting polymeric material will be a gel or a crosslinked entity due to the additional reactive sites provided by the triisocyanates. Since such entities are difficult to process, diisocyanates are preferred. Of course, the weight percent of the urethane polymer constituent in the block copolymer will be largely controlled by the amount of the urethane-forming monomers utilized in association with the amount of the amine terminated polymers utilized. That is, the molecular weight of the urethane or the urethane urea polymer constituent can vary considerably from 1,000 to 100,000. Generally, urethane block copolymers as well as urethane-urea block copolymers having desirable processing properties, as well as cured properties have been produced wherein the weight percent of the urethane or the urethane-urea constituent is from 5 percent o 95 percent based upon the total weight of the block copolymer and preferably from about 25 percent to about 75 percent.

In order that the *in situ* polymerization of the urethane polymer or the urethane-urea copolymers, wherein diamines are utilized, do not react with compounds containing active hydrogens such as water, alcohol, acids, etc., it is generally important that such polymerization is carried out in an environment substantially free from active hydrogens as in an inert atmosphere such as nitrogen, helium, argon, and the like. However, it is to be understood that a small amount of active hydrogen compounds may be

present provided that a sufficient number of urethane polymers or urethane-urea polymers may be formed from the amine group of the amine terminated polymer.

Catalysts are often used to promote the formation of the urethane polymer constituent of the block copolymer. The catalysts suitable for promoting the formation of urethane polymers are also generally suitable for promoting the formation of the urethane constituent in the present invention and such catalysts are well known to those skilled in the art. For example, tertiary amines which are conventional urethane catalysts may be used and generally their catalytic strength is in proportion to their base strength except when steric hindrance interferes. An exception is triethylenediamine (1,4-diaza[2 · 2 · 2]bicyclooctane), a preferred catalyst which is much more powerful than would be predicted from its base strength due probably to its complete lack of steric hindrance. A large number of metallic compounds constitute another class of catalysts and generally these catalysts are powerful enough to promote "one-shot" processes. Of the various members of this class, the organotins are favored. Specific examples of suitable organotins include tetra-n-butyltin acetate, n-butyltin trichloride, trimethyltin hydroxide, dimethyltin dichloride and tributyltin acetate. A preferred organotin is di-n-butyltin dilaurate.

Since the polymerization temperature of the urethane polymer constituent can range from about ambient to about 100°C and since the reaction of the urethane polymer or urethane-forming monomers with the amine group of the amine terminated polymer occurs easily at ambient temperatures and at a faster rate at elevated temperatures, *in situ* polymerization of the urethane constituent is preferred. Although the reaction of the urethane can be controlled to a large extent through the selection of temperature as well as the particular polyisocyanate and the polyhydroxy compound, the choice of the catalyst can often give broader control. In fact, the catalytic effect of some catalysts are so powerful that they often override the influences of the reactants and therefore such catalysts are used to control the reaction. One group of such catalysts, as well known to those skilled in the art, are the aforementioned organotins which contain from 1 to 6 carbon atoms.

The amine terminated polymer can be made from any of the types of monomers set forth above with regard to the preparation of said polymer and can be made in the exact same manner. Often, the resulting urethane block copolymer will be readily processable at temperatures below the melt temperature of the urethane constituent (or the urethane-urea constituent) but will exhibit properties of the urethane constituent (or the urethane-urea constituent) upon cure. Desirably, the amine terminated polymer is made from conjugated dienes having from 4 to 12 carbon atoms, vinyl substituted aromatic compounds having from 8 to 20 carbon atoms, and copolymers made from combinations thereof. Desirable conjugated dienes contain from 4 to 8 carbon atoms. Specifically preferred conjugated monomers include butadiene and isoprene, whereas preferred vinyl substituted aromatic monomers include styrene, vinyltoluene, and 4-t-butylstyrene. A preferred copolymer is made from butadiene and styrene monomers, that is, SBR (styrene-butadiene rubber).

The *in situ* polymerization of the urethane block copolymers or the urethane-urea block copolymers can generally be carried out in bulk or in a solvent.

Generally, the choice of urethane preparation conditions (that is, in bulk or in a solvent) controls, to an extent, the processing properties of the block copolymer. When the polyurethane portion is prepared in a solvent, which is essentially a non-solvent for polyurethane (that is, non-polar solvents such as hexane, heptane, or toluene), the resulting urethane block copolymers are millable at room temperature. However, when the urethane preparation is carried out in bulk or in solvents of good dissolving power for urethane, such as DMF, DMAC, the urethane block copolymers must be processed at a temperature near or above the softening point of the urethane polymer constituent. Nevertheless, such block copolymers are still readily processable.

Various additives, colorants, reinforcing fillers, stabilizers, and the like may be utilized as are common in the preparation of the amine terminated polymer. Thus, when utilizing a conjugated diene such as butadiene or isoprene in preparing the amine terminated polymer, conventional fillers such as carbon black, silica, oil, and the like may be utilized. Additionally, the amine terminated polymer portion of the block copolymer may be readily cured through the use of conventional curing agents. Thus, for rubber-type amine terminated polymers, conventional sulfur-containing compounds, organic peroxides, and the like may be utilized at convenient or conventional amounts to produce thermosets. The properties of the cured urethane block copolymers generally retain the general properties of urethane such as good abrasion resistance and flexibility. Thus, the urethane block copolymers may be used for items such as rubber goods, molded goods, and heavy-duty industrial applications where chemical, abrasion, and corrosion resistance are desired as well as for any items wherein rubber is commonly used. When the amine polymer is a copolymer such as styrene-butadiene, the resulting urethane block copolymer may generally be used wherever reinforced cured rubbers have been utilized.

Example XI

A 1 liter resin kettle fitted with a mechanical stirrer, nitrogen inlet, thermometer and Dean-Stark trap topped with a condenser was charged with 30.0 g of 1,2-PBd$NH_2$ containing 0.0054 equivalents of $NH_2$ as a hexane cement (Example V) and 750 ml of toluene. The mixture was heated to reflux and remove any water by azeotropic distillation. Distillation was continued to remove the hexane. After the

vapor temperature reached 107°C, the heating was stopped and the toluene cement was allowed to cool to about 60°C. Then, 65.6 g of Adiprene LD 784 (Trademark) prepolymer (DuPont polytetramethylene ether glycol reacted with toluene diisocyanate) with 6.32 weight percent NCO (0.0987 equivalents of NCO) was added and mixed well while heating the reaction to 85—90°C. After 15 min. of mixing, 4.5 ml of 1,4-butanediol (0.102 equivalents of OH) were charged and the reaction was heated at reflux for 1 hr. A catalyst (0.05 ml of dibutyltin dilaurate) was then added and reflux was continued for an additional 15 hrs. After this period of reaction, there was no detectable NCO absorbance in the IR spectrum indicating complete reaction. The copolymer was recovered by coagulation in methanol and drying in vacuo at 70°C overnight. The copolymer recovery was 93.2 g. A portion of the copolymer was mill compounded with 2.0 pph of 2,5-dimethyl-2,5-bis(t-butylperoxy) hexane and then molded and cured for 2 hrs. at 120°C. The physical properties are given below.

Physical properties of 30/70—1,2-PBd$NH_2$/Adiprene-1,4-butenediol copolymer

| | |
|---|---|
| Hardness, Shore A | 45.3 |
| Elongation, percent | 300 |
| Tensile at break, kg/cm² | 38,36 |

Example XII

A 1 liter resin kettle fitted as described in Example XVIII was charged with 30.0 g of 1,2-PBd$NH_2$ (Example V) containing 0.0054 equivalents of $NH_2$ as a hexane cement and 750 ml of toluene. The hexane and any water present were removed by azeotropic distillation as described in Example XIV. After cooling the reaction to 60—70°C under nitrogen, 37.7 ml (46.2 g or 0.265 moles) of an 80/20 mixture of 2,4-/2,6-toluenediisocyanate was added and stirred for 30 min. before 24.7 ml (25.2 g or 0.278 moles) of 1,4-butanediol and 0.05 ml of dibutyltin dilaurate were added. The reaction mixture was heated at reflux for 6 hrs. and then allowed to cool and stir under nitrogen for 16 hrs. The copolymer was precipitated in methanol, collected by suction filtration and dried in vacuo at 50°C. Copolymer recovery was 79.2 g. A portion of the copolymer was compounded on a two roll mill, cured and tested as indicated below.

30/70—1,2-PBd$NH_2$/Toluene diisocyanate-1,4-butanediol copolymer

| | |
|---|---|
| Compounding | |
| 1,2-PBd$NH_2$/TDI—1,4-Bu$(OH)_2$ | 100 pts. |
| 325 Mesh Silica | 150 pts. |
| Dicup R | 2.0 pts. |
| Silane Z6075* | 1.5 pts. |
| Cured 16 hrs. at 135°C | |
| *Triacetoxy vinyl silane | |

| | |
|---|---|
| Physical properties | |
| Flexural Strength$\times 10^{-3}$ kg/cm² | 0,335 |
| Flexural Modulus$\times 10^{-5}$ kg/cm² | 0,524 |
| Izod, Notched mkg/cm | 0,01227 |
| Hardness, Rockwell | M 78.5 |

Urea/urethane

As previously noted, in lieu of a purely urethane polymer constituent, a urethane-urea copolymer may be utilized. Otherwise, the preparation as well as the other aspects of the formation of the urethane block copolymer such as catalysts, polymerization method, and the like, are the same. In order to form the urethane-urea type block copolymers polyisocyanates and polyhydroxy compounds and diamines as set out in claim 7 are used. Suitable diamine monomers have the formula $H_2N—R—NH_2$ wherein R is the same as set forth above with regard to the discussion of the urea block copolymer. Similarly, specific examples of diamines as well as preferred diamines are the same. Generally, the urethane-urea block copolymer will have uses very similar to either the urea block copolymer or the urethane block copolymer depending upon the number of urea or urethane groups within the copolymer. In any event, the equivalent ratio of the polyhydroxy compounds plus the diamine compounds to the polyisocyanate compounds generally ranges from about 0.8 to about 1.2 with a preferred range being from about 0.95 to about 1.05. As with the urea block copolymers or the urethane block copolymers, the urethane-urea block copolymers may contain additives, conventional fillers, reinforcing fibers, stabilizers, colorants, and the like, and may be cured with conventional curing agents.

Example XIII

To a 1 liter, 3 necked flask fitted with a mechanical stirrer, nitrogen inlet, thermometer and a distillation head, the indicated quantities of amine terminated 1,2-polybutadiene (1,2-PBd$NH_2$,) of 24,600 viscosity average molecular weight were charged as hexane cement. The indicated quantities of hydrocarbon solvent were added and the mixture heated to distill off the hexane and any water.

When the vapor temperature had reached 95°C in the heptane example, or 107°C in the toluene example, the mixture was cooled under nitrogen to below the boiling point of the solvent and the distillation head was replaced by a reflux condenser. The indicated quantities of an isocyanate terminated polycaprolactone diol prepolymer were added to the flask and dispersed by stirring. The required quantity of a solution of 2,4-toluenediamine in dioxane was added to each reaction mixture and after addition of tin catalyst, the entire mixture was heated at reflux to generate the urethane-urea block polybutadiene copolymer. The product was recovered by precipitation in alcohol followed by suction filtration and drying in vacuo overnight. Samples of each preparation were compounded as indicated below on a two-roll mill. Test pieces were molded and cured 20 mins. at 177°C. The physical properties are listed below.

Preparation of 30/70—1,2-PBd$NH_2$/urethane-urea copolymers

| | A | B |
|---|---|---|
| 1,2-PBd$NH_2$ (50.6 percent solids in hexane) | 60.8 g | 60.5 g |
| Heptane | 500 ml | — ml |
| Toluene | — ml | 500 ml |
| NIAX D520 (Trademark) Prepolymer* (6.91 wt. percent NCO) | 65 g | 65 g |
| 2,4-toluenediamine in dioxane (0.2256 g) | 29.6 ml | 29.6 ml |
| Dibutyltin dilaurate | 0.1 ml | 0.1 ml |
| Reflux time | 10 hrs. | 24 hrs. |
| Reflux temperature | 95°C | 107°C |
| 30/70—1,2-PBd$NH_2$/urethane-urea | 100 | 100 parts |
| Silica, 325 mesh | 150 | 150 parts |
| Dicup R | 2.0 | 2.0 parts |
| Silane, Z6075 | 1.5 | 1.5 parts |

*Union Carbide polycaprolactone diol reacted with toluene diisocyanate

Physical properties of cured, compounded 1,2-PBd$NH_2$/urethane-urea copolymers

| | A | B |
|---|---|---|
| Flexural strength x $10^{-3}$ kg/$cm^2$ | 0,2023 | 0,3052 |
| Flexural modulus x $10^{-5}$ kg/$cm^2$ | 0,3591 | 0,3115 |
| Izod, notched, mkg/cm | 0,0242 | 0,02585 |
| Izod, unnotched, mkg/cm | 0,077 | 0,1045 |
| Gardner impact, cmkg | 3,57 | 3,11 |
| Heat distortion temperature °C at loading 18,6 kp/$cm^2$ | (230 0,01 cm deflection) | (230 0,007 cm deflection |
| Hardness, rockwell | M24 | E3 |

Example XIV

To a 1 liter, three-necked flask fitted with a thermometer mechanical stirrer and vacuum take-off was charged 200 g of a 20 percent hexane cement of amine terminated 1,2-polybutadiene (1,2-PBd$NH_2$). The hexane was stripped under vacuum to remove traces of water, then the 1,2-PBd$NH_2$ was redissolved in 300 ml of dry hexane. To this polymer cement was added 200 g of Adiprene L—167 (6.5 percent NCO) (DuPont polytetramethylene ether glycol diisocyanate terminated polymer) which was dispersed by vigorous stirring while the hexane was removed under heat and vacuum. The polymer-prepolymer mixture was maintained at 70°C while 0.75 g of 2,5-dimethyl-2,5-bis-(t-butylperoxy)hexane charged at 1.875 pph 1,2-PBd$NH_2$) was dispersed in the mixture. Then 42.9 g of molten MOCA (methylene-bis-4[2-chloroaniline]) was added to the mixture with rapid stirring. The reaction was permitted to stir vigorously under vacuum for 1 min. and then the mixture was poured into molds and cured for 2 hrs. at 120°C. The physical properties obtained are given below.

Physical properties of 14/86—1,2-PBdNH$_2$/urethane-urea

| Measured at | | 22,8°C | 100°C |
|---|---|---|---|
| Shore A | | 93 | — |
| Elongation at break | | 505 | 436 percent |
| Modulus at % elongation | | | |
| | 5 | 20,44 | — kg/cm$^2$ |
| | 100 | 80,5 | 50,89 kg/cm$^2$ |
| | 300 | 120,75 | 60,69 kg/cm$^2$ |
| Break | | 215,25 | 74,41 kg/cm$^2$ |

Imide

The stable amine terminated polymer can be reacted with imide-forming monomers *in situ* to produce an imide block copolymer generally of the formula P-I-P where P represents the amine terminated polymer and I represents the imide polymer constituent. The resultant imide block copolymers generally exhibit very similar or identical properties to that of conventional imide polymers but also possess greatly improved processability properties in that they are readily millable and moldable at temperatures well below the melting point of conventional imide polymers, and often times even at ambient temperatures. Due to the ease of preparation, an *in situ* formation is highly desired.

The imide polymer constituent of the block copolymer is produced by the chemical reaction of an alkyl dianhydride, preferably an aromatic dianhydride, or combinations thereof, with an alkyl diamine, a cycloalkyl diamine, or preferably an aromatic diamine. When the formation is *in situ* with the amine terminated polymer, the anhydride will readily react with the amine group of the amine terminated polymer. The alkyl dianhydrides contain from 8 to 30 carbon atoms with the aromatic dianhydrides containing from 10 to 40 carbon atoms. Naturally, the aromatic dianhydrides may contain substituted alkyl groups such as those connecting aromatic nuclei, or existing as on alkyl side chains, or combinations thereof wherein the total number of carbon atoms in the compound is from 11 to 40 carbon atoms. The alkyl diamines contain from 2 to 20 carbon atoms, the cycloalkyl diamines contain from 4 to 20 carbon atoms, and the aromatic diamines contain from 6 to 20 carbon atoms. Similarly, the aromatic diamines may contain alkyl groups which connect the aromatic nuclei, exist as alkyl side chains, or combinations thereof, wherein the total number of carbon atoms of the substituted aromatic diamine is from 7 to 20 carbon atoms. Examples of aromatic dianhydrides include pyromellitic dianhydride, 2,3,6,7-naphthalene tetracarboxylic dianhydride; 3,3', 4,4'-diphenyl tetracarboxylic dianhydride; 1,2,5,6-naphthalene tetracarboxylic dianhydride; 2,2',3,3'-diphenyl tetracarboxylic dianhydride; 2,2-bis(3,4-dicarboxyphenyl) propane dianhydride; 2,2'-bis(3,4-dicarboxyphenyl) sulfone dianhydride; 3,4,9,10-perylene tetracarboxylic acid dianhydride; bis(3,4-dicarboxyphenyl) ether dianhydride; 3,3',4,4'-benzophenone tetracarboxylic dianhydride; ethyleneglycol bistrimellitate dianhydride and a dianhydride having the following formula

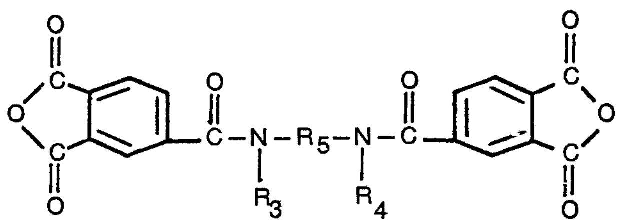

wherein $R_3$ and $R_4$ can be hydrogen, an alkyl having from 1 to about 12 carbon atoms, and an aromatic or an alkyl substituted aromatic having from 6 to 20 carbon atoms. Preferably, $R_3$ and $R_4$ are identical. $R_5$ is an alkyl having from 2 to 12 carbon atoms or a cycloalkyl having from 4 to 15 carbon atoms. Preferably, $R_5$ is an aromatic or alkyl substituted aromatic containing from 6 to 20 carbon atoms or an aromatic having the formula:

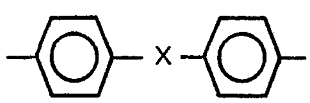

where X=O, SO$_2$, S, an alkyl having from 1 to 6 carbon atoms,

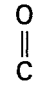

and SO. Highly preferred dianhydrides include pyromellitic dianhydride and benzophenone tetracarboxylic dianhydride.

Examples of preferred diamines include alkylenediamines having from 2 through 8 carbon atoms such as hexamethylenediamine; m-phenylenediamine; p-phenylenediamine; toluenediamine; and diamines having the formula:

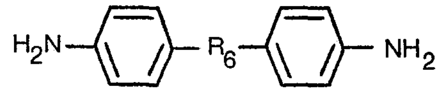 ;

where $R_6$ is one of the divalent radicals selected from the group consisting of $C_1$ through $C_3$ alkylene;

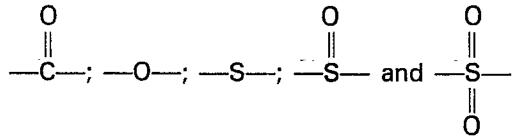

Preferred diamines include bis(4-aminophenyl)ether, bis(4-aminophenyl)sulfide, meta-phenylenediamine, methylene dianiline, and para-phenylenediamine.

The amount of dianhydride and diamines utilized can vary depending upon the generally desired molecular weight of the imide polymer constituent although as understood by those skilled in the art, the molecular weight will also be dependent upon the reaction temperature as well as various kinetic ramifications. Desirably, the equivalent ratio of the diamine to the dianhydride ranges from about 1.10 to about 0.80 with a preferred equivalent ratio being 1.05 to about 0.90. Should only small amounts of the imide-forming monomers be added, some of the amine terminated polymers will not form a block copolymer in that there is not a sufficient amount of the monomers present. Desirably, an amount of the imide-forming monomers is added to that at least 5 percent and preferably at least 25 percent of the amine terminated polymers are reacted to form imide block copolymers. The reaction of the amine group of the amine terminated polymer with a dianhydride occurs quite readily and, generally the efficiency or the reaction with the dianhydrides is very high and often can, for example, be 100 percent. The weight of the imide polymer constituent may vary from 10 percent to 75 percent by weight with 25 percent to 75 percent being preferred and 50 percent to about 75 percent being highly preferred, based upon the total weight of the block copolymer. Additionally, an amount of imide-forming monomers is generally used so that a desirable molecular weight of the imide constituent is between 5,000 and 35,000 and preferably between 10,000 and 35,000.

As before with the other various block copolymers, it is necessary that the *in situ* reaction as well as any reaction of an amine terminated polymer with an imide polymer containing an unreacted anhydride group thereon, be carried out in an environment substantially free from active hydrogens such as water, alcohol, acids, or the like. Therefore, inert gases or atmospheres such as nitrogen, argon, or helium may be utilized. It is to be understood that a very small amount of active hydrogen may be present provided that a sufficient number of amine terminated polymers are reacted to produce the imide block copolymer having desirable properties. In the preparation of the imide block copolymer, the amine monomer is usually added to the amine terminated polymer. Then, the dianhydride monomer is generally added in an amount which is slightly in excess of that of the diamine. Reaction with both the amine group of the amine terminated polymer and the polymerization of the imide-forming monomers readily occurs at room temperature although heat may be applied to increase the reaction rate. Generally, both reactions occur in a temperature range of from about 0°C to about 200°C. Hence, catalysts are usually not required.

As previously noted, the amine terminated polymer is prepared in a solvent. An imide solvent which is dimethyl formamide, dimethyl acetamide or dimethyl sulfoxide is added to the reaction vessel before any *in situ* polymerization occurs and the solvent of the amine terminated polymer removed by distillation. Then, the diamine is added followed by a preferred excess of dianhydride with a fairly rapid exothermic reaction occurring. Since the formation of the imide polymer constituent is extremely moisture sensitive, it is very important that substantially all traces of moisture such as that contained in any of the solvents be removed from the reaction vessel so that polymerization is not retarded. The formation of the imide polymer constituent involves a ring-closing reaction whereby water is the by-product. Since it is difficult to distill the water from the imide constituent in the reaction vessel an azeotropic forming solvent which is toluene or benzene is added to the reaction vessel. The by-product water is then removed by heating the vessel and condensing the water and aromatic solvent vapors. A Dean-Stark type trap may be utilized to separate the condensed vapors. Since the water is heavier than the aromatic solvent, it will accumulate in the bottom of the trap with the solvent overflowing from the upper portion back into the reaction vessel. Naturally, the reflux temperature of the vessel is determined by the type of azeotropic solvent utilized. The reaction is continued generally until completion, with the block copolymer formed existing in a non-aqueous suspension which can be readily separated as by drum drying or by precipitation with any non-solvent with respect to the amine terminated portion of the block copolymer.

The imide block copolymer may be cured in any conventional manner with the exception of a

block copolymer wherein the polymer of the amine terminated portion tends to degrade upon curing such as the polymers made from the various vinyl aromatic monomers. Thus, conventional sulfur compounds, organic peroxide compounds, and the like may be utilized. It has been found that improved physical properties of cured imide block copolymers may be obtained, especially when the polymer of the amine terminated polymer portion has a high vinyl content, when a particular class of organic peroxides having the formula $CH_3(R)_2$—$OC(R)_2CH_3$ is used wherein R represents an alkyl having from 1 to 20 carbon atoms, a cycloalkyl having from 4 to 20 carbon atoms, an aromatic, or combinations thereof, containing from 6 to 20 carbon atoms. Examples of typical R groups include methyl, ethyl, propyl, butyl, pentyl, hexyl, heptyl, decyl, dodecyl, octadecyl, phenyl, tolyl, xylyl, benzyl, phenethyl, naphthyl, methylnaphthyl, naphthylethyl, diphenyl benzylphenyl, butylphenyl, cyclohexyl, cycloheptyl, cyclohexylmethyl, cycloheptylethyl, methylcycloheptyl, and the like.

The organic peroxides of the above formula may be diperoxides or mixed peroxides, that is, peroxides which have two different $CH_3C(R)_2O$. radicals. Specific examples include dicumyl peroxide, a preferred peroxide, ditertiarybutyl peroxide, tertiarybutyl-cumyl peroxide, di-tertiaryamyl peroxide, tertiarybutyl-tertiaryamyl peroxide, tertiaryamyl-cumyl peroxide, di-tertiaryoctyl peroxide, bis(1,1-diphenyl-ethyl) peroxide, bis(1,1-dicyclohexyl-ethyl) peroxide, bis(1-cyclohexyl-1-methyl-ethyl) peroxide, also known as bis(2-cyclohexyl-2-propyl) peroxide, bis(1-phenyl-1-ethyl-ethyl) peroxide, also known as bis[2-(2-phenylbutyl) peroxide], and the like. The symmetrical peroxides which have identical groups on each side of the peroxy oxygens are generally more available and therefore are preferred. However, mixed peroxides, when available, can be used very satisfactorily.

Whether mixed peroxides or diperoxides of the above class are used to impart to the block copolymers improved properties which are generally more favorable than if ordinary peroxides other than the above class were used, the peroxides used are advantageously those having a reasonably fast rate of decomposition at the temperature employed.

The various imide block copolymers possess properties generally exhibited by conventional imide polymers in that they are usually very strong and very light. Due to the preparation, they are generally void free. Furthermore, the molecular weight reduction, due to cleavage or degradation upon heating to 600°C, is usually much lower for the imide block copolymers of the present invention when compared to the weight reduction of conventional imide polymers. Another advantage is that the imide block copolymers can be processed by cold milling and molding at low temperatures such as about 150°C when compared to temperatures of approximately 600°C required by conventional imide polymers. Yet another advantage is that the imide block copolymers possess a greater plasticity that is more processable than comparable block copolymers made from a rubber isocyanate terminated-base polymer process. The high plasticity allows many of the imide block copolymers to be compounded with silica, for example, 100 parts of silica per 100 parts of rubber amine terminated polyimide copolymer (which gave improved flexural and impact properties when compared to the unfilled samples).

The imide block copolymers of the present invention can be utilized in applications wherever conventional imide polymers are utilized such as valve seals, retaining rings, compressor vanes, piston and bearing retaining rings, electrical relay activators, hose and tubing, and various electrical equipment where a high temperature is required such as wire and cable wraps, coil wrap, and the like. Moreover, due to their ease of processability, the imide block copolymers can also be utilized as solids such as in molds and as coatings.

Although the polymer of the amine terminated polymer constituent may be made from any of the monomers set forth above, generally, rubber-type polymers are preferred. That is, preferred monomers include the conjugated dienes having from 4 to 12 carbon atoms and preferably from 4 to 8 carbon atoms may be utilized. Additionally, vinyl substituted aromatic monomers having from 8 to 20 carbon atoms are desired. Copolymers of these two types of monomers are also desired. Highly preferred monomers include butadiene, isoprene, vinyltoluene, styrene, 4-t-butylstyrene and a copolymer of butadiene and styrene, that is SBR (styrene-butadiene rubber). As with the other block copolymers, whenever a high vinyl rubber polymer is utilized such as 1,2-polybutadiene, the resulting block copolymer will not be as flexible nor have the impact strength as a low vinyl polymer such as 1,4-polybutadiene.

The invention will be better understood by the following examples.

Example XV

To a clean, dry, nitrogen-purged beverage bottle was added 50 ml of dry tetrahydrofuran (THF), 72.0 g of butadiene and after cooling to −25°C in a $CCl_4$ dry ice bath, 4.70 ml of 1.57 M n-butyl lithium (7.2 m mol) in hexane. After 4 hrs., a sample was taken and was shown by NMR to be 90 percent 1,2-polybutadiene with a 17,000 molecular weight by GPC. To this solution was added 14.0 ml of 1.034 M TDI (14.5 m mol) in toluene. Sampling after 5 min. showed 25 percent coupling by GPC. Immediately after sampling, 5 ml of molten dry caprolactam (44.2 mmol) was then added, followed by 1.0 ml of distilled water (55.5 m mol). A portion of this mixture was coagulated in methanol, dried and was titrated to give 0.118 milliequivalents of amine per gram.

The reaction mixture was transferred to a 2 liter resin kettle containing 500 ml of dry dimethyl

acetamide (DMAC). After the THR was removed by distillation, 200 ml of dry toluene and 16.71 g (0.155 moles) of m-phenylene diene was added. To this solution at 100°C was added 49.77 g (0.155 moles) of benzophenone tetracarboxylic acid dianhydride (BTDA). A Dean-Stark trap was installed and the temperature was raised such that smooth boiling occurred (130—135°C). Overnight, a total of 12.9 cc of toluene insolubles were collected in the trap. Analysis by gas chromatography shows this to be mainly water with some DMAC present. The clear solution during this time became a fine non-aqueous suspension in the DMAC/toluene mixture. Coagulation in excess methanol followed by methanol washing, filtering, and vacuum drying, gave 115 g of copolymer. Milling on a cold mill was used to introduce the fillers and curatives. Samples were cured for 20 mins. at 177°C.

Additional copolymers with variations in polybutadiene vinyl content, molecular weight and content were prepared by the general procedure of Example XVIII. The pertinent data on copolymer composition, compounding, and physical properties is tabulated below.

TABLE III

| | 1 | 2 | 3 | 4 | 5 | 6 | 7 | 8 |
|---|---|---|---|---|---|---|---|---|
| Percent imide | 50 | 60 | 70 | 50 | 50 | 50 | — | — |
| Polybutadiene molecular weight$\times 10^{-3}$ | 17.0 | 20.0 | 23.6 | 11.2 | 11.6 | 24.8 | — | — |
| $NH_2$ meq/gm | .118 | .068 | .06 | .09 | .17 | .08 | — | — |
| Percent vinyl | 90 | 92 | 83 | 83 | 75 | 77 | — | — |
| Plasticity, $cm^2$* | 15.3 | 15.6 | 7.8 | 12.6 | 25.4 | 16.0 | — | — |
| Dicumylperoxide parts | 2 | 2 | 4 | 4 | 6 | 6 | 2 | 2 |
| Silica parts | — | — | — | 100 | 100 | 100 | 100 | 100 |
| Flex modulus GPa | 2.36 | 1.50 | 3.56 | 3.44 | 5.34 | 5.25 | 5.71 | 5.81 |
| Flex strength MPa | 40.3 | 17.9 | 44.1 | 49.7 | 52.7 | 60.1 | 75.9 | 56.8 |
| Notched Izod J/m | 10.7 | 11.2 | — | 16.5 | 13.9 | 9.1 | 16.0 | 14.9 |
| Gardner impact strength mJ | 176 | 141 | 141 | 299 | 188 | 184 | 226 | 219 |
| Heat distortion temperature | | | | | | | | |
| @ 1.84 MPa (°C) | 122 | 100 | 180.5 | 140 | — | 195 | >250 | 238 |
| Hardness Rockwell E | 52 | 42 | 92 | 47 | 79 | 83 | 80 | 80 |
| TGA @10°C/min. | | | | | | | | |
| Tonset (°C) in $N_2$ | 412 | 410 | 433 | 438 | 438 | 424 | — | — |
| in air | 395 | 414 | 438 | 440 | 447 | 443 | — | — |
| Percent loss @579°C in $N_2$ | 30.5 | 26.6 | 31.6 | 29.8 | 31.7 | 31.8 | — | — |
| in air | 53.6 | 45.0 | 46.0 | 51.0 | 47.6 | 50.5 | — | — |

*area of 0.5 g sample pressed at 100°C for 30 sec. under 908 kg ram pressure in Carver 15,24×15,24 cm. laboratory press.

**Claims**

1. An epoxy copolymer composition, comprising:

a primary amine terminated polymer terminally linked to an epoxy polymer constituent to form the epoxy copolymer;
said amine terminated polymer being an end capped polymer formed by the reaction of an anionically prepared polymer and a single polyisocyanate or polyisothiocyanate compound so that at least one unreacted isocyanate or isothiocyanate end portion exists wherein said unreacted isocyanate or isothiocyanate end portion has been converted to an amine group;
said polymer made from monomers selected from conjugated diene, vinyl substituted aromatic or alphamethyl styrene, vinyl or alphamethyl vinyl substituted pyridine, vinyl or alphamethyl vinyl substituted quinoline and a compound selected from

1. $CH_2{=}CACN$ wherein A is CN, $CF_3$. $CH_3$, or H;
2. $CH_2{=}CACO_2R$ wherein A is $CO_2R$, $SO_2R$, $CH_3$ or H;
3. $CH_2{=}CANO_2$ wherein A is Cl, $CH_3$ or H;
4. $CH_2{=}CACON(R)_2$ wherein A is $CH_3$ or H;

wherein each R independently is a 1 to 15 carbon atom alkyl group, a 4 to 15 carbon atom cycloalkyl, an aromatic, a 1 to 15 carbon atom alkyl substituted aromatic, or a 4 to 15 carbon atom cycloalkyl substituted aromatic group, or hydrogen, said polyisocyanate and said polyisothiocyanate having the formula

$$R{-}(N{=}C{=}X)_n$$

wherein R is an aliphatic group containing from 2 to 20 carbon atoms, a cycloaliphatic group containing from 4 to 20 carbon atoms, an aromatic group containing from 6 to 20 carbon atoms, and combinations thereof, n is 2 or 3 an X is oxygen or sulfur;
characterized in that, said epoxy polymer constituent is selected from epoxidized soy bean oil, butadiene diepoxide, dicyclopentadiene diepoxide, epoxidized castor oil and compounds made by reacting epoxy monomers or epoxy prepolymers with hydroxyl terminated polymers, and that said polymer being a homopolymer or a copolymer, whereby the copolymer is made only from monomers of at least one conjugated diene and at least one vinyl substituted aromatic compound, and that the copolymer shows an ABA-structure wherein A is an amine terminated polymer.

2. A process for producing a composition of a primary amine terminated polymer terminally linked to an epoxy polymer, comprising the steps of:

anionically polymerizing monomers to form a polymer, said polymer being a homopolymer or a copolymer, said homopolymer made from monomers selected from conjugated diene, vinyl substituted aromatic or alphamethyl styrene, vinyl or alphamethyl vinyl substituted pyridine, vinyl or alphamethyl vinyl substituted quinoline and a compound selected from

1. $CH_2{=}CACN$ wherein A is CN, $CF_3$, $CH_3$ or H;
2. $CH_2{=}CACO_2R$ wherein A is $CO_2R$, $SO_2R$, $CH_3$ or H;
3. $CH_2{=}CANO_2$ wherein A is Cl, $CH_3$ or H;
4. $CH_2{=}CACON(R)_2$ wherein A is $CH_3$ or H;

wherein each R independently is a 1 to 15 carbon atom alkyl group, a 4 to 15 carbon atom cycloalkyl, an aromatic, a 1 to 15 carbon atom alkyl substituted aromatic, or a 4 to 15 carbon atom cycloalkyl substituted aromatic group, or hydrogen;
said copolymer made from monomers of conjugated dienes and vinyl substitutes aromatics;
reacting said anionically prepared polymer with a compound selected from a single polyisocyanate or a polyisothiocyanate to form an end capped polymer;
said polyisocyanate and said polyisothiocyanate having the formula

$$R{-}(N{=}C{=}X)_n$$

employing an equivalent ratio thereof to alkali metal on the polymer of at least 1.1., while controlling additionally the conditions to ensure that most or all polymers are end capped,
wherein R is an aliphatic group containing from 2 to 20 carbon atoms, a cycloaliphatic group containing from 4 to 20 carbon atoms, an aromtic group containing from 6 to 20 carbon atoms, and combinations thereof, n is 2 or 3 and X is selected from oxygen and sulfur;
reacting an imide compound having at least one NH-bond on the (thio)-amide nitrogen with said end capped polymer to form an acylurea-type terminated polymer;

utilizing an equivalent amount of said amide compound to said end capped polyisocyanate polymer ranging from 1.0 to about 20;
hydrolyzing said acylurea terminated polymer to produce the primary amine terminated polymer;
utilizing an equivalent amount of said water to said imide compound ranging from 1.0 to 10;
characterized by reacting said amine terminated polymer with an epoxy constituent selected from epoxidized soy bean oil, butadiene diepoxide, dicyclopentadiene diepoxide, epoxidized castor oil, and compounds consisting of (a) an epoxy prepolymer made from an epoxy monomer reacted with hydroxyl terminated monomers, and (b) an epoxy monomer reacted with hydroxyl terminated monomers;
polymerizing said epoxy-forming monomers to form an epoxy polymer;
said polymer connected to said amine terminated polymer;
achieving an ABA-structure wherein A is the amine terminated polymer and
said hydroxyl terminated compounds selected from the class consisting of bisphenol A, recorsinol, hydroquinone, glycerol, ethylene glycol, 1,4-butane diol, 1,3-propane diol, and novolac resins derived from phenol and aldehyde.

3. A urea block copolymer composition, comprising a primary amine terminated polymer connected terminally, to a urea polymer constituent to form the urea block copolymer;

said amine terminated polymer being prepared in the manner set forth in claim 1, said amine terminated polymer having a molecular weight of from 3,000 to 100,000;
characterized in that, said urea polymer constituent being made from urea-forming monomers, the amount of said urea polymer constituent ranging from 5 percent to 95 percent based upon the total weight of said block copolymer composition, and the molecular weight of said urea constituent ranging from 1,000 to 40,000, and that the copolymer shows a PUP-structure, wherein U is the urea.

4. A process for producing a urea block copolymer, comprising the steps of:

amine terminated polymer preparing as in claim 2, characterized by the method defined by reacting said amine terminated polymer with a compound selected from (a) a urea polymer made from urea-forming monomers, and (b) urea-forming monomers;
the amount of said urea constituent ranging from 5 percent to 95 percent by weight based upon the total weight of said urea block copolymer, and the molecular weight of said urea constituent ranging from 1,000 to 40,000; and
polymerizing said urea-forming monomers to produce a urea polymer, said urea polymer connected to said amine terminated polymer to form said urea block copolymer, achieving a PUP-structure wherein U is the urea, while other active hydrogen containing materials than the urea monomers are excluded in the step of forming the condensation polymer blocks.

5. A urethane block copolymer composition, comprising:

a primary amine terminated polymer terminally connected to a urethane polymer constituent to form the urethane block copolymer;
said amine terminated polymer being prepared in the manner set forth in claim 1, and having a molecular weight of from 3,000 to 100,000;
characterized by said urethane polymer constituent being the reaction product of polyhydroxy compounds having at least two hydroxyl groups and a polyisocyanate having the formula

$$R—(N=C—X)_n$$

wherein R is an aliphatic containing from 2 to 20 carbon atoms, a cycloaliphatic containing from 4 to 20 carbon atoms, an aromatic containing from 6 to 20 carbon, and combinations thereof, n is 2 or 3 and X is selected from oxygen or sulfur;
the amount of said urethane polymer ranging from 5 percent to 95 percent based upon the total weight of said block copolymer, and the molecular weight of said urethane polymer constituent ranging from 1,000 to 100,000 forming said copolymer resulting in a PUP-structure wherein U is the urethane.

6. A process for producing a urethane block copolymer, comprising the steps of:

preparing an amine terminated polymer by the method defined in claim 2, characterized by reacting said amine terminated polymer with a urethane constituent selected from (a) a urethane polymer made from urethane-forming monomers, (b) a urethane prepolymer made from urethane-forming monomers, and (c) urethane-forming monomers; the amount of said urethane constituent ranging

from 5 percent to 95 percent by weight based upon the total weight of said urethane block copolymer, and the molecular weight of said urethane constituent ranging from 1,000 to 100,000, and polymerizing said urethane-forming monomers or said urethane prepolymer to produce a urethane polymer, said urethane polymer connected to said amine terminated polymer and forming said urethane block copolymer, resulting in a PUP-structure wherein U is the urethane while other active hydrogen containing materials than the urethane monomers are excluded in the steps of forming the condensation polymer block(s).

7. A urethane-urea block copolymer composition, comprising:

a primary amine terminated polymer terminally connected to a urethane-urea polymer constituent to form the urethane-urea block copolymer;

said amine terminated polymer being prepared in the manner as set forth in claim 1 and having a molecular weight of from 3,000 to 100,000, characterized by said urethane-urea polymer constituent being the reaction product of polyisocyanates with polyhydroxy compounds and diamines with the formula

$$H_2N—R—NH_2$$

wherein R is an aliphatic containing from 2 to about 20 carbon atoms, a cycloaliphatic containing from 4 to about 20 carbon atoms, and aromatic containing from 6 to about 20 carbon atoms, and combinations thereof; and

wherein said polyhydroxy compound which has at least two hydroxyl groups is selected from the class consisting of dihydric alcohols; polyhydric alcohols; dihydric phenols, polyhydric phenols; polyether polyols prepared from a compound selected from the class consisting of cyclic ethers having from 2 to 8 carbon atoms, and substituted cyclic ethers having from 2 to 8 carbon atoms in the ring, said substituted group selected from the class consisting of an alkyl having from 1 to 20 carbon atoms, a cycloalkyl having from 4 to 20 carbon atoms, an aromatic ring, and a substituted aromatic ring wherein said substituted group is an alkyl having from 1 to 20 carbon atoms or a cycloalkyl having from 4 to 20 carbon atoms, polyester diols; and polylactone diols;

said urethane-urea forming polyisocyanate monomers having the formula

$$R—(N{=}C{=}X)_n$$

wherein R is an aliphatic containing from 2 to 20 carbon atoms, a cycloaliphatic containing from 4 to 20 carbon atoms, an aromatic containing from 6 to 20 carbon atoms, and combination thereof, n is 2 or 3 and X is selected from oxygen or sulfur:

and said polyhydroxy compound having at least two hydroxyl groups thereon, forming said copolymer resulting in a PUP-structure wherein U is the urea/urethane, wherein the amount of said urethane-urea polymer constituent ranges from about 5 to about 95 percent by weight based upon the total weight of said block copolymer.

8. A process for producing a urethane-urea block copolymer, comprising the steps of

preparing an amine terminated polymer by the method defined in claim 2 characterized by reacting said amine terminated polymer with a urethane-urea polymer constituent as defined in claim 7; and

polymerizing said urethane-urea polymer forming constituent to form a urethane-urea polymer;

said urethane-urea polymer connected to said amine terminated polymer and forming said urethane-urea block copolymer resulting in a PUP-structure wherein U is the urea/urethane, while other active hydrogen containing materials than the urethane-urea monomers are excluded in the step of forming the condensation polymer block(s).

9. A nylon block copolymer foam composition, comprising:

a primary amine terminated polymer terminally connected to a nylon polymer constituent to form the nylon block copolymer composition: said amine terminated polymer being prepared in the manner as set forth in claim 1 and having a molecular weight of from 3,000 to 100,000, characterized by said nylon constituent made from monomers selected from (a) anionically polymerizable lactams having from 3 to 15 carbon atoms. (b) diacid chlorides reacted with diamines, and (c) diacids with diamines, so that salts thereof are formed;

the amount of said nylon polymer constituent ranging from 5 percent to 95 percent by weight based upon the total weight of said block copolymer and from 0,5 to 50 parts by weight of a blowing agent per 100 parts by weight of said block copolymer being used to prepare the foam, the blowing agent being water, pentane, hexane or heptane.

10. A process for producing a nylon block copolymer foam, comprising the steps of:

preparing an amine terminated polymer by the method defined in claim 2, characterized by reacting said amine terminated polymer with nylon forming monomers to form a block copolymer, said monomers selected from (a) lactams having from 3 to 15 carbon atoms, (b) diamines with diacid chlorides and (c) salts of diacids and diamines;
wherein said amide compound is selected from amides of ammonia, amides of primary amines, lactams, sulfonic acid amides, sultams, and a compound having the formula

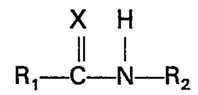

wherein $R_1$ and $R_2$ are selected from an aliphatic containing from 1 to 20 carbon atoms, a cycloaliphatic containing from 4 to 20 carbon atoms, an aromatic containing from 6 to 20 carbon atoms, combinations thereof, and hydrogen, and wherein X is oxygen or sulfur;
said nylon polymer constituent of said block copolymer ranging from 5 percent to 95 percent by weight;
the molecular weight of said nylon polymer constituent ranges from 5,000 to 50,000; and
producing a foam by adding from 0.5 to 50 parts of a blowing agent for every 100 parts of said block copolymer, the blowing agent being water, pentane, hexane or heptane while other active hydrogen containing materials than the nylon forming monomers and the blowing agent are excluded.

11. An imide block copolymer composition, comprising:

a primary amine terminated polymer terminally connected to an imide polymer constituent to form the block copolymer;
said amine terminated polymer being prepared in the manner set forth in claim 1 with a molecular weight from 3,000 to 100,000, characterized by said imide constituent being the reaction product of a diamine and an dianhydride, said diamine selected from an alkyl diamine having from 2 to 20 carbon atoms, a cycloalkyl diamine having from 4 to 20 carbon atoms, an aromatic diamine having from 6 to 20 carbon atoms, and an alkyl substituted aromatic diamine having from 7 to 20 carbon atoms;
said dianhydride selected from an alkyl dianhydride having from 8 to 30 carbon atoms, an aromatic dianhydride having from 10 to 40 carbon atoms, and an alkyl substituted aromatic dianhydride having from 11 to 40 carbon atoms;
the amount of said imide polymer constituent ranging from 10 percent to 75 percent by weight based upon the total weight of said block copolymer; and the molecular weight of said imide polymer constituent ranging from 5,000 to 35,000, forming said copolymer using a solvent-mixture of dimethyl formamide, dimethylacetamide or dimethyl sulphoxide and benzene or toluene resulting in a PIP-structure wherein I is the imide polymer constituent.

12. A process for producing an imide block copolymer, comprising the steps of:

preparing an amine terminated polymer by the method defined in claim 2, characterized by reacting said amine terminated polymer with imide forming monomers; and
polymerizing said imide forming monomers to produce an imide polymer;
said imide polymer connected to said amine terminated polymer and forming the imide block copolymer using a solvent mixture of dimethyl formamide, dimethylacetamide or dimethyl sulphoxide and benzene or toluene resulting in an PIP-structure wherein I represents the imide, said imide polymer being the reaction product of a diamine and dianhydride, said diamine selected from an alkyl diamine having from 2 to 20 carbon atoms, a cycloalkyl diamine having from 4 to 20 carbon atoms, an aromatic diamine having from 6 to 20 carbon atoms;
said dianhydride selected from an alkyl dianhydride having from 8 to 30 carbon atoms, an aromatic dianhydride having from 10 to 40 carbon atoms, and an alkyl-substituted aromatic dianhydride having from 11 to 40 carbon atoms;
the amount of said imide polymer constituent of said block copolymer ranging from 10 percent to 75 percent by weight based upon the total weight of said block copolymer, and
the molecular weight of said imide polymer constituent ranging from 5,000 to 35,000 by weight, while other active hydrogen containing materials than the imide forming monomers are excluded.

**Patentansprüche**

1. Epoxidcopolymerzusammensetzung enthaltend:

ein Polymer mit primärer Amin-Endgruppe, das am Ende an einen Epoxidpolymer-Bestandteil unter Bildung des Epoxidcopolymers angekoppelt ist;
wobei das Polymer mit Amin-Endgruppe ein Endkappenpolymer ist, das durch die Reaktion eines anionisch hergestellten Polymers und einer einzigen Polyisocyanat-oder Polyisothiocyanat-Verbindung gebildet wird, so daß mindestens ein nicht reagierter Isocyanat- oder Isothiocyanat-Endteil existiert, wobei der nicht reagierte Isocyanat-oder Isothiocyanat-Endteil in eine Amingruppe umgewandelt worden ist, und wobei das Polymer aus Monomeren hergestellt wird, die ausgewählt werden von konjugiertem Dien, vinylsubstituierten aromatischen oder Alphamethylstyrol, vinyl- oder alphamethylvinylsubstituiertem Pyridin, vinyl-oder alphamethylvinylsubstituiertem Chinolin und einer Verbindung, die ausgewählt wird von

1. $CH_2{=}CACN$ wobei A gleich CN, $CF_3$. $CH_3$, oder H;
2. $CH_2{=}CACO_2$ wobei A gleich $CO_2R$, $SO_2R$, $CH_3$ oder H;
3. $CH_2{=}CANO_2$ wobei A gleich Cl, $CH_3$ oder H;
4. $CH_2{=}CACON(R)_2$ wobei A gleich $CH_3$ oder H;

wobei jedes R unabhängig eine Alkylgruppe mit 1 bis 15 Kohlenstoffatomen ist, ein Cycloalkyl mit 4 bis 15 Kohlenstoffatomen, ein Aromat, ein alkylsubstituierter Aromat mit 1 bis 15 Kohlenstoffatomen, oder eine cycloalkylsubstituierte aromatische Gruppe mit 4 bis 15 Kohlenstoffatomen oder Wasserstoff, wobei das Polyisocyanat und das Polyisothiocyanat die Formel

$$R{-}(N{=}C{=}X)_n$$

wobei R eine aliphatische Gruppe ist mit 2 bis 20 Kohlenstoffatomen, eine cycloaliphatische Gruppe mit 4 bis 20 Kohlenstoffatomen, eine aromatische Gruppe, enthaltend 6 bis 20 Kohlenstoffatome und deren Kombinationen und wobei N=2 oder 3 und X Sauerstoff oder Schwefel ist, dadurch gekennzeichnet, daß der Epoxidpolymerbestandteil ausgewählt wird aus epoxidiertem Sojabohnenöl, Butadiendiepoxid, Dicyclopentadiendiepoxid, epoxidiertem Kastoröl und Verbindungen, die durch Reaktion von Epoxidmonomeren oder Epoxidprepolymeren mit hydroxylterminierten Polymeren hergestellt werden, und daß das Polymer ein Homopolymer oder ein Copolymer ist, wobei das Copolymer ausschließlich aus Monomeren hergestellt wird, mit mindestens einem konjugierten Dien und mindestens einer vinylsubstituierten aromatischen Verbindung, und daß das Copolymer eine ABA-Struktur aufweist, wobei A ein aminterminiertes Polymer ist.

2. Verfahren zum Herstellen einer Zusammensetzung von einem mit einem primären Amin terminierten Polymer, das am Ende mit einem Epoxidpolymer verbunden ist und folgende Stufen umfaßt:

Anionische Polimerisierung von Monomeren unter Bildung eines Polymers, wobei das Polymer ein Homopolymer oder Copolymer ist, und das Homopolymer aus Monomeren hergestellt ist, die ausgewählt sind aus konjugiertem Dien, vinylsubstituiertem aromatischem oder Alphamethylstyrol, vinyl- oder alphamethylvinylsubstituiertem Pyridin, vinyl-oder alphamethylvinylsubstituiertem Chinolin und einer Verbindung, die ausgewahlt ist aus

1. $CH_2{=}CACN$ wobei A gleich CN, $CF_3$, $CH_3$ oder H;
2. $CH_2{=}CACO_2R$ wobei A gleich $CO_2R$, $SO_2R$, $CH_3$ oder H;
3. $CH_2{=}CANO_2$ wobei A gleich Cl, $CH_3$ oder H;
4. $CH_2{=}CACON(R)_2$ wobei A gleich $CH_3$ oder H;

wobei jedes R unabhängig eine Alkylgruppe mit 1 bis 15 Kohlenstoffatomen darstellt, ein Cycloalkyl mit 4 bis 15 Kohlenstoffatomen, einen Aromaten, einen alkylsubstituierten Aromaten mit 1 bis 15 Kohlenstoffatomen oder eine cycloalkylsubstituierte aromatische Gruppe mit 4 bis 15 Kohlenstoffatomen, oder Wasserstoff;
und wobei das Copolymer aus Monomeren konjugierter Diene oder vinylsubstituierter Aromaten hergestellt ist;
Reaktion des anionisch hergestellten Polymers mit einer Verbindung, die ausgewählt wird aus einem einzigen Polyisocyanat oder einem Polyisothiocyanat unter Bildung eines Endkappenpolymers;
wobei das Polyisocyanat und das Polyisothiocyanat die Formel

$$R{-}(N{=}C{=}X)_n$$

besitzt, unter Verwendung eines äquivalenten Verhältnisses davon im Vergleich zum Alkalimetall auf

dem Polymer von mindestens 1,1, wobei zusätzlich die Bedingungen gesteuert werden, um sicherzustellen, daß die meisten oder sämtliche Polymere endverkappt werden, wobei R eine aliphatische Gruppe mit 2 bis 20 C-Atomen darstellt, eine cycloaliphatische Gruppe mit 4 bis 20 C-Atomen, eine aromatische Gruppe mit 6 bis 20 Kohlenstoffatomen und deren Kombinationen und wobei N gleich 2 oder 3 und X aus Sauerstoff und/oder Schwefel ausgewählt wird;

und wobei eine Amidverbindung mit mindestens einer NH-Bindung am (Thio)-Amidstickstoff mit obigem endverkappten Polymer unter Bildung eines acylharnstoffartigen Endpolymers reagiert;

und wobei eine äquivalente Menge der Amidverbindung im Verhältnis zum endverkappten Polyisocyanat-Polymer verwendet wird, die im Bereich von 1,0 bis etwa 20 liegt;

und wobei das acylharnstoffterminierte Polymer unter Herstellung des primären aminterminierten Polymers hydrolisiert wird, wobei eine äquivalente Menge an Wasser im Verhältnis zur Imidverbindung im Bereich von 1,0 bis 10 verwendet wird, dadurch gekennzeichnet, daß man das aminterminierte Polymer mit einem Epoxidbestandteil reagiert, der aus epoxidiertem Sojabohnenöl, Butadiendiepoxid, Dicyclopentadiendiepoxid, epoxidiertem Kastoröl und Verbindungen auswählt, die aus (a) einem Epoxidprepolymer, das aus einem Epoxidmonomer hergestellt wurde, welches mit hydroxilterminierten Monomeren reagiert hat, und (b) einem Epoxidmonomer bestehen, das mit hydroxylterminierten Monomeren reagiert hat;

und daß die Epoxid bildenden Monomeren unter Ausbildung eines Epoxidpolymers polimerisieren,

und daß das Polymer mit dem aminterminierten Polymer verbunden wird;

und daß eine ABA-Struktur erzielt wird, worin A das aminterminierte Polymer ist, und

daß die hydroxylterminierten Verbindungen, die aus der Klasse ausgewählt wurden, die aus Bisphenol A, Resorcin, Hydrochinon, Glycerin, Äthylenglycol, 1,4-Butandiol, 1,3-Propandiol und Novolacharzen bestehen, die von Phenol und Aldehyden abstammen.

3. Harnstoffblockcopolymer-Zusammensetzung, enthaltend ein primäraminterminiertes Polymer, das am Ende mit einem Harnstoffpolymerbestandteil verbunden ist unter Ausbildung eines Harnstoffblockcopolymers, wobei das aminterminierte Polymer in der nach Anspruch 1 beschriebenen Art und Weise hergestellt wird, und wobei das aminterminierte Polymer ein Molekulargewicht von 3000 bis 100 000 besitzt, dadurch gekennzeichnet, daß der Harnstoffpolymerbestandteil aus Harnstoff bildenden Monomeren hergestellt wird,

wobei die Menge des Harnstoffpolymerbestandteils im Bereich von 5% bis 95% liegt, basierend auf dem Gesamtgewicht der Blockcopolymerzusammensetzung und daß das Molekulargewicht des Harnstoffbestandteils im Bereich von 1000 bis 40 000 liegt, und daß das Copolymer eine PUP-Struktur besitzt, worin U Harnstoff darstellt.

4. Verfahren zur Herstellung eines Harnstoffblockcopolymers mit folgenden Stufen:

Herstellung eines aminterminierten Polymers nach dem in Anspruch 2 beschriebenen Verfahren, dadurch gekennzeichnet, daß ein aminterminiertes Polymer mit einer Verbindung umgesetzt wird, die ausgewählt wird aus (a) einem Harnstoffpolymer, das aus Harnstoff bildenden Monomeren hergestellt wird und (b) Harnstoff bildenden Monomeren;

und daß die Menge des Harnstoffbestandteils im Bereich von 5 bis 95 Gew% liegt, basierend auf dem Gesamtgewicht des Harnstoffblockcopolymers und daß das Molekulargewicht des Harnstoffbestandteils im Bereich von 1000 bis 40 000 liegt, und daß die Harnstoff bildenden Monomeren unter Herstellung eines Harnstoffpolymers polymerisieren, und daß das Harnstoffpolymer mit dem aminterminierten Polymer verbunden wird unter Ausbildung eines Harnstoffblockcopolymers wobei eine PUP-Struktur erzielt wird, worin U Harnstoff darstellt, während andere aktiven Wasserstoff enthaltende Materialien, abgesehen von den Harnstoffmonomeren, bei der Bildungsstufe der Kondensationspolymerblocks ausgeschlossen sind.

5. Urethanblockcopolymer-Zusammensetzung enthaltend:

ein primäraminterminiertes Polymer, das am Ende mit einem Urethanpolymerbestandteil verbunden ist unter Ausbildung des Urethanblockcopolymers;

und wobei das aminterminierte Polymer in der in Anspruch 1 beschriebenen Art und Weise hergestellt wird, mit einem Molekulargewicht von 3000 bis 100 000, dadurch gekennzeichnet, daß der Urethanpolymerbestandteil das Reaktionsprodukt von Polyhydroxidverbindungen darstellt, die mindestens zwei Hydroxylgruppen besitzen und einem Polyisocyanat mit der Formel

$$R—(N=C=X)_n$$

worin R eine aliphatische Gruppe mit 2 bis 20 C-Atomen, eine cycloaliphatische Gruppe mit 4 bis 20 C-Atomen, ein Aromat mit 6 bis 20 C-Atomen und deren Kombinationen ist und N=2 oder 3 ist, und X aus Sauerstoff und/oder Schwefel ausgewählt wird;

und daß die Menge des Urethanpolymers im Bereich von 5% bis 95% liegt, basierend auf dem Gesamtgewicht des Blockcopolymers, und daß das Molekulargewicht des Urethanpolymerbestandteils im Bereich von 1000 bis 100 000 liegt, und daß das Copolymer in einer PUP-Struktur ausgebildet wird, worin U das Urethan darstellt.

6. Verfahren zum Herstellen eines Urethanblockcopolymers mit den folgenden Stufen:

Herstellen eines aminterminierten Polymers nach dem in Anspruch 2 beschriebenen Verfahren, dadurch gekennzeichnet,
daß ein aminterminiertes Polymer mit einem Urethanbestandteil umgesetzt wird, welcher ausgewählt wird, aus (a) einem Urethanpolymer, das aus Urethan bildenden Monomeren hergestellt wird, (b) einem Urethanprepolymer, das aus Urethan bildenden Monomeren hergestellt wird, und (c) Urethan bildenden Monomeren; wobei die
Menge des Urethanbestandteils im Bereich von 5 bis 95 Gew% liegt, basierend auf dem Gesamtgewicht des Urethanblockcopolymers, und daß das Molekulargewicht des Urethanbestandteils im Bereich von 1000 bis 100 000 liegt, und daß die Urethan bildenden Monomeren oder das Urethanprepolymer polimerisiert wird unter Ausbildung eines Urethanpolymers, und daß das Urethanpolymer mit dem aminterminierten Polymer verbunden wird, unter Ausbildung des Urethanblockcopolymers, was eine PUP-Struktur ergibt, worin U das Urethan darstellt, während andere aktiven Wasserstoff enthaltende Materialien, abgesehen von den Urethanmonomeren, bei den Herstellungsstufen der Kondensationspolymerblock(s) ausgeschlossen sind.

7. Urethan-Harnstoffblockcopolymer-Zusammensetzung enthaltend:

ein primäraminterminiertes Polymer, das am Ende mit einem Urethan-Harnstoffpolymerbestandteil verbunden ist, unter Ausbildung eines Urethan-Harnstoffblockcopolymers, wobei das aminterminierte Polymer nach der in Anspruch 1 beschriebenen Art und Weise hergestellt wird und ein Molekulargewicht von 3000 bis 100 000 besitzt, dadurch gekennzeichnet,
daß der Urethan-Harnstoffpolymerbestandteil das Reaktionsprodukt von Polyisocyanaten mit Polyhydroxyverbindungen und Diaminen mit der Formel

$$H_2N—R—NH_2$$

darstellt, worin R eine aliphatische Gruppe mit 2 bis 20 C-Atomen ist, eine cycloaliphatische Gruppe mit 4 bis etwa 20 C-Atomen und ein Aromat mit 6 bis etwa 20 C-Atomen und deren Kombinationen, und daß die Polyhydroxy-Verbindung, die mindestens 2 Hydroxylgruppen besitzt, aus der Klasse ausgewählt wird, die aus di-hydrischen Alkoholen, polyhydrischen Alkoholen, dihydrischen Phenolen, polyhydrischen Phenolen und Polyätherpolyolen besteht, die aus einer Verbindung hergestellt werden, die aus der Klasse ausgewählt werden, die aus cyclischen Äthern mit 2 bis 8 C-Atomen und substituierten cyclischen Äthern mit 2 bis 8 C-Atomen im Ring besteht, wobei die substituierte Gruppe aus der Klasse ausgewählt wird, die aus einer Alkylgruppe mit 1 bis 20 C-Atomen, einem Cycloalkyl mit 4 bis 20 C-Atomen, einem aromatischen Ring und einem substituierten aromatischen Ring besteht, wobei die substituierte Gruppe ein Alkyl mit 1 bis 20 C-Atomen oder ein Cycloalkyl mit 4 bis 20 C-Atomen, Polyester-Diole und Polylactondiole ist, und wobei die Urethan-Harnstoff bildenden Polyisocyanatmonomere die Formel besitzen

$$R—(N{=}C{=}X)_n$$

besitzt, worin R eine aliphatische Gruppe mit 2 bis 20 Kohlenstoffatomen, ein Cycloaliphat mit 4 bis 20 C-Atomen, ein Aromat mit 6 bis 20 C-Atomen und deren Kombinationen ist, und N gleich 2 oder 3 ist und X Sauerstoff und/oder Schwefel darstellt, und daß die Polyhydroxyverbindung mindestens zwei Hydroxylgruppen besitzt, und ein Copolymer ausgebildet wird, das eine PUP-Struktur aufweist, worin U das Harnstoff/Urethan darstellt, und wobei die Menge des Urethan-Harnstoffpolymerbestandteils im Bereich von etwa 5 bis etwa 95 Gew% liegt, basierend auf dem Gesamtgewicht des Blockcopolymers.

8. Verfahren zum Herstellen eines Urethan-Harnstoffblockcopolymers mit folgenden Stufen:

Herstellen eines aminterminierten Polymers nach dem im Anspruch 2 beanspruchten Verfahren, dadurch gekennzeichnet,
daß das aminterminierte Polymer mit einem Urethan-Harnstoffpolymerbestandteil nach Anspruch 7 umgesetzt wird, und daß der Urethan-Harnstoffpolymer bildende Bestandteil polymerisiert wird unter Ausbildung eines Urethan-Harnstoffpolymers;
und daß das Urethan-Harnstoffpolymer mit dem aminterminierten Polymer verknüpft wird, unter Ausbildung des Urethan-Harnstoffblockcopolymers mit PUP-Struktur, worin U der Harnstoff-Urethanbestandteil ist, während andere aktiven Wasserstoff enthaltende Materialien, abgesehen von den Urethan-Harnstoffmonomeren in der Herstellungsstufe der Kondensationspolymerblock(s) ausgeschlossen sind.

9. Nylonblockcopolymer-Schaumzusammensetzung enthaltend:

ein primäraminterminiertes Polymer, das am Ende mit einem Nylonpolymerbestandteil verbunden ist, unter Ausbildung der Nylonblockcopolymer-Zusammensetzung:
wobei das aminterminierte Polymer in der in Anspruch 1 beschriebenen Art und Weise hergestellt wird und ein Molekulargewicht von 3000 bis 100 000 aufweist, dadurch gekennzeichnet,
daß der Nylonbestandteil aus Monomeren hergestellt wird, die aus (a) anionisch polymerisierbaren Lactanen mit 3 bis 15 Kohlenstoffatomen, (b) mit Diaminen umgesetzte Disäurechloride und (c) Disäuren mit Diaminen ausgewählt werden, so daß deren Salze gebildet werden;
und daß die Menge des Nylonpolymerbestandteils im Bereich von 5 bis 95 Gew% liegt, basierend auf dem Gesamtgewicht des Blockcopolymers und von 0,5 bis 50 GewTeilen eines Blähmittels pro 100 Gewichtsteile des Blockcopolymers zur Herstellung des Schaums verwendet werden, und daß das Blähmittel Wasser, Pentan, Hexan oder Heptan ist.

10. Verfahren zum Herstellen eines Nylonblockcopolymerschaums mit folgenden Stufen:

Herstellen eines aminterminierten Polymers durch das in Anspruch 2 beschriebene Verfahren, dadurch gekennzeichnet, daß man das aminterminierte Polymer mit den Nylon bildenden Monomeren umsetzt unter Ausbildung eines Blockcopolymers, wobei die Monomeren aus (a) Lactam mit 3 bis 15 Kohlenstoffatomen (b) Diaminen mit Disäurechloriden und (c) Salzen der Disäuren und Diamine auswählt; und wobei die Amidverbindung ausgewählt wird aus Amiden von Ammoniak, Amiden primärer Amine, Lactame, Sulfonsäureamide, Sultame und einer Verbindung mit der Formel

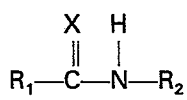

worin $R_1$ und $R_2$ ausgewählt werden aus Aliphaten mit 1 bis 20 Kohlenstoffatomen, Cycloaliphaten mit 4 bis 20 Kohlenstoffatomen und Aromaten mit 6 bis 20 Kohlenstoffatomen sowie deren Kombinationen und Wasserstoff, worin X Sauerstoff oder Schwefel ist;
und daß der Nylonpolymerbestandteil des Blockcopolymers mit Bereich von 5 bis 95% Gew% liegt, wobei das Molekulargewicht des Nylonpolymerbestandteils im Bereich von 5000 bis 50 000 liegt, und daß ein Schaum dadurch hergestellt wird, daß man 0,5 bis 50 Teile eines Bläh- bzw. Schäummittels für jede 100 Teile des Blockcopolymers hinzugefügt werde, und daß das Blähmittel Wasser, Pentan, Hexan oder Heptan ist, wobei andere aktive Wasserstoff enthaltende Materialien, abgesehen von den Nylon bildenden Monomeren, und dem Blähmittel ausgeschlossen sind.

11. Imidblockcopolymer-Zusammensetzung enthaltend:

ein primäraminterminiertes Polymer, das am Ende mit einem Imidpolymerbestandteil unter Bildung des Blockcopolymers verbunden ist;
wobei das aminterminierte Polymer in der in Anspruch 1 angegebenen Art und Weise mit einem Molekulargewicht von 3000 bis 100 000 hergestellt wird, dadurch gekennzeichnet,
daß der Imidbestandteil das Reaktionsprodukt eines Diamins und eines Dianhydrids darstellt, wobei das Diamin ausgewählt wird aus einem Alkyldiamin mit 2 bis 20 Kohlenstoffatomen, einem Cycloalkyldiamin mit 4 bis 20 Kohlenstoffatomen, einem aromatischen Diamin mit 6 bis 20 Kohlenstoffatomen und einem alkylsubstituiertem aromatischem Diamin mit 7 bis 20 Kohlenstoffatomen;
und daß das Dianhydrid ausgewählt wird aus einem Alkyldianhydrid mit 8 bis 30 Kohlenstoffatomen, einem aromatischen Dianhydrid mit 10 bis 40 Kohlenstoffatomen und einem substituierten aromatischen Dianhydrid mit 11 bis 40 Kohlenstoffatomen;
und wobei die Menge des Imidpolymerbestandteils im Bereich von 10 bis 75 Gew% liegt, basierend auf dem Gesamtgewicht des Blockcopolymers, und daß das Molekulargewicht des Imidpolymerbestandteils im Bereich von 5000 bis 35 000 liegt, wobei das Copolymer gebildet wird unter Verwendung eines Lösungsmittelgesmiches von Dimethylformamid, Dimethylacetamid oder Dimethylsulfoxid und Benzol oder Toluoul, wobei sich eine PIP-Struktur ergibt, worin I den Imidpolymerbestandteil darstellt.

12. Verfahren zum Herstellen eines Imidblockcopolymers mit folgenden Stufen:

Herstellen eines aminterminierten Polymers durch das im Anspruch 2 angegebene Verfahren, dadurch gekennzeichnet,

daß man das aminterminierte Polymer mit Imid bildenden Monomeren umsetzt, und die Imid bildenden Monomeren unter Herstellung eines Imidpolymers polymerisiert, und daß das Imidpolymer mit dem aminterminierten Polymer unter Bildung des Imidblockcopolymers verbunden wird, wobei ein Lösungsmittelgemisch von Dimethylformamid, Dimethylacetamid oder Dimethylsulfoxid und Benzol oder Toluol verwendet wird, und daß eine PIP-Struktur entsteht, worin I das Imid darstellt, und daß das Imidpolymer das Reaktionsprodukt eines Diamins oder Dianhydrids ist, wobei das Diamin ausgewählt wird aus einem Alkyldiamin mit 2 bis 20 Kohlenstoffatomen, einem Cycloalkyldiamin mit 4 bis 20 Kohlenstoffatomen, einem aromatischen Diamin mit 6 bis 20 Kohlenstoffatomen, und daß das Dianhydrid ausgewählt wird aus einem Alkyldianhydrid mit 8 bis 30 Kohlenstoffatomen, einem aromatischen Dianhydrid mit 10 bis 40 Kohlenstoffatomen und einem alkylsubstituierten aromatischen Dianhydrid mit 11 bis 40 Kohlenstoffatomen;

wobei die Menge des Imidpolymerbestandteils des Blockcopolymers im Bereich von 10 bis 75 Gew% liegt, basierend auf dem Gesamtgewicht des Blockcopolymers, und daß das Molekulargewicht des Imidpolymerbestandteils im Bereich von 5000 bis 35 000 beträgt, wobei andere aktiven Wasserstoff enthaltende Materialien, abgesehen von den Imid bildenden Monomeren, ausgeschlossen sind.

**Revendications**

1. Composition de copolymère époxy, comprenant:

un polymère terminé par une amine primaire, en liaison terminale avec un constituant polymère époxy pour former le copolymère époxy;

ledit polymère à terminaison amine étant un polymère à protection terminale formé par réaction d'un polymère préparé par voie anionique et d'un seul polyisocyanate ou polyisothiocyanate de manière qu'il existe au moins une portion terminale isocyanate ou isothiocyanate n'ayant pas réagi qui ait été convertie en un groupe amine; ledit polymère étant formé à partir de monomères choisis entre un diène conjugué, du styrène aromatique ou de l'alphaméthylstyrène à substituant vinyle, de la pyridine à substituant vinyle ou alpha-méthylvinyle, de la quinoléine à substituant vinyle ou alpha-méthylvinyle et un composé choisi entre

1. $CH_2$=CACN où A représente CN, $CF_3$. $CH_3$, ou H;
2. $CH_2$=$CACO_2R$ où A représente $CO_2R$, $SO_2R$, $CH_3$ ou H;
3. $CH_2$=$CANO_2$ où A représente Cl, $CH_3$ ou H;
4. $CH_2$=$CACON(R)_2$ où A représente $CH_3$ ou H;

formules dans lesquelles chaque groupe R représente, indépendamment, un groupe alkyle ayant 1 à 15 atomes de carbone, un groupe cycloalkyle ayant 4 à 15 atomes de carbone, un groupe aromatique, un groupe aromatique à substituant alkyle ayant 1 à 15 atomes de carbone ou un groupe aromatique à substituant cycloalkyle ayant 4 à 15 atomes de carbone, ou l'hydrogène, ledit polyisocyanate et ledit polyisothiocyanate répondant à la formule

$$R—(N=C=X)_n$$

dans laquelle R est un groupe aliphatique contenant 2 à 20 atomes de carbone, un groupe cycloaliphatique contenant 4 à 20 atomes de carbone, un groupe aromatique contenant 6 à 20 atomes de carbone, et des associations de ces groupes, *n* est égal à 2 ou à 3 et X est l'oxygène ou le soufre;

caractérisée en ce que ledit constituant formé du polymère époxy est choisi entre l'huile de soja époxydée, le diépoxyde de butadiène, le diépoxyde de dicyclopentadiène, l'huile de ricin époxydée et des composés obtenus par réaction de monomères époxy ou de prépolymères époxy avec des polymères à terminaison hydroxyle, et en ce que ledit polymère est un homopolymère ou un copolymère, le copolymère n'étant formé que de monomères d'au moins un diène conjugué et d'au moins un composé aromatique à substituant vinyle, et en ce que le copolymère présente une structure ABA dans laquelle A est un polymère à terminaison amine.

2. Procédé de production d'une composition d'un polymère terminé par une amine primaire en liaison terminale avec un polymère époxy, comprenant les étapes de:

polymérisation anionique de monomères pour former un polymère, ledit polymère étant un homopolymère ou un copolymère, ledit homopolymère étant formé à partir de monomères choisis entre un diène conjugué, du styrène aromatique ou de l'alpha-méthylstyrène à substituant vinyle, de la pyridine à substituant vinyle ou alpha-méthylvinyle, de la quinoléine à substituant vinyle ou alpha-méthylvinyle et un composé choisi entre

1. $CH_2$=CACN où A représente CN, $CF_3$, $CH_3$ ou H;
2. $CH_2$=$CACO_2R$ où A représente $CO_2R$, $SO_2R$, $CH_3$ ou H;
3. $CH_2$=$CANO_2$ où A représente CL, $CH_3$ ou H;
4. $CH_2$=$CACON(R)_2$ où A représente $CH_3$ ou H;

formules dans lesquelles chaque groupe R représente, indépendamment, un groupe alkyle de 1 à 15 atomes de carbone, un groupe cycloalkyle de 4 à 15 atomes de carbone, un groupe aromatique, un groupe aromatique à substituant alkyle ayant 1 à 15 atomes de carbone ou un groupe aromatique à substituant cycloalkyle ayant 4 à 15 atomes de carbone, ou l'hydrogène;
ledit copolymère étant préparé à partir de monomères de diènes conjugués et d'aromatiques à substituant vinyle;
réaction dudit polymère préparé par voie anionique avec un composé choisi entre un seul polyisocyanate ou un polyisothiocyanate pour former un polymère à protection terminale;
ledit polyisocyanate et ledit polyisothiocyanate répondant à la formule

$$R—(N=C=X)_n$$

en utilisant un rapport d'équivalents de ce composé au métal alcalin sur le polymère d'au moins 1,1, tout en réglant en outre les conditions de manière à assurer que la majeure partie ou la totalité des polymères soit protégée à l'extrémité,
R est un groupe aliphatique contenant 2 à 20 atomes de carbone, un groupe cycloaliphatique contenant 4 à 20 atomes de carbone, un groupe aromatique contenant 6 à 20 atomes de carbone, et des associations de ces groupes, *n* a la valeur 2 ou 3 et X est choisi entre l'oxygène et le soufre;
réaction d'un composé amidique ayant au moins une liaison NH sur l'atome d'azote de (thio)-amide avec ledit polymère à protection terminale pour former un polymère à terminaison du type acylurée;
utilisation d'une quantité dudit composé amidique équivalent audit polymère du type polyisocyanate à protection terminale allant de 1,0 à environ 20;
hydrolyse dudit polymère à terminaison acylurée pour produire le polymère à terminaison amine primaire;
utilisation d'une quantité d'eau équivalant audit composé imidique allant de 1,0 à 10;
caractérisé par la réaction dudit polymère à terminaison amine avec un constituant époxy choisi entre l'huile de soja époxydée, le diépoxyde de butadiène, le diépoxyde de dicyclopentadiène, l'huile de ricin époxydée et des composés comprenant (a) un prépolymère époxy obtenu à partir du produit de réaction d'un monomère époxy avec les monomères à terminaison hydroxyle, et (b) un monomère époxy ayant réagi avec des monomères à terminaison hydroxyle;
la polymérisation desdits monomères de formation d'un époxy pour former un polymère époxy;
ledit polymère étant relié audit polymère à terminaison amine;
la réalisation d'une structure ABA dans lequel A est le polymère à terminaison amine et
lesdits composés à terminaison hydroxyle étant choisis dans la classe comprenant le bisphénol A, le résorcinol, l'hydroquinone, le glycérol, l'éthylène-glycol, le 1,4-butane-diol, le 1,3-propane-diol et des résines novolaques dérivées du phénol et d'un aldéhyde.

3. Composition de copolymère à séquence d'urée, comprenant un polymère terminé par une amine primaire en liaison terminale avec un polymère d'urée pour former le copolymère à séquence d'urée; ledit polymère à terminaison amine étant préparé de la manière indiquée dans la revendication 1,

ledit polymère à terminaison amine ayant un poids moléculaire de 3000 à 100 000;
caractérisée en ce que, ledit polymère d'urée est obtenu à partir de monomères formant de l'urée, la quantité dudit polymère d'urée allant de 5 à 95% sur la base du poids total de ladite composition de copolymère séquence, et le poids moléculaire dudit polymère d'urée allant de 1000 à 40 000,
et en ce que le copolymère présente une structure PUP dans laquelle U désigne l'urée.

4. Procédé de production d'un copolymère à séquence d'urée, comprenant les étapes de:

préparation d'un polymère à terminaison amine par le procédé défini dans la revendication 2, caractérisé par la réaction dudit polymère à terminaison amine avec un composé choisi entre (a) un polymère d'urée obtenu à partir de monomères formant de l'urée et (b) des monomères formant de l'urée; la quantité dudit polymère d'urée allant de 5 à 95% en poids sur la base du poids total dudit copolymère à séquence d'urée et le poids moléculaire dudit polymère d'urée allant de 1000 à 40 000; et
la polymérisation desdits monomères formant de l'urée pour produire un polymère d'urée, ledit polymère d'urée étant relié audit polymère à terminaison amine pour former ledit copolymère à séquence d'urée, avec obtention d'une structure du type PUP dans laquelle U est l'urée, tandis que

des matières contenant de l'hydrogène actif autres que les monomères d'urée sont exclues dans l'étape de formation des séquences de polymère de condensation.

5. Composition de copolymère à séquence d'uréthane, comprenant un polymère terminé par une amine primaire, en liaison terminale avec un polymère d'uréthanne pour former le copolymère à séquence d'uréthanne; ledit polymère à terminaison amine étant préparé de la manière indiquée dans la revendication 1 et ayant un poids moléculaire de 3000 à 100 000;

caractérisée par le fait que le polymère d'uréthanne est le produit de réaction de composés polyhydroxyliques ayant au moins deux groupes hydroxyle et d'un polyisocyanate de formule

$$R—(N=C=X)_n$$

dans laquelle R est un groupe aliphatique contenant 2 à 20 atomes de carbone, un groupe cycloaliphatique contenant 4 à 20 atomes de carbone, un groupe aromatique contenant 6 à 20 atomes de carbone, et leurs associations, *n* a la valeur 2 ou 3 et X est choisi entre l'oxygène et le soufre; la quantité dudit polymère d'uréthanne allant de 5 à 95% sur la base du poids total dudit copolymère séquence et le poids moléculaire dudit polymère d'uréthanne allant de 1000 à 100 000, la formation dudit copolymère aboutissant à une structure du type PUP dans laquelle U est l'uréthanne.

6. Procédé de production d'un copolymère à séquence d'uréthanne, comprenant les étapes de:

préparation d'un polymère à terminaison amine par le procédé défini dans la revendication 2, caractérisé

par la réaction dudit polymère à terminaison amine avec un constituant uréthanne choisi entre (a) un polymère d'uréthanne obtenu à partir de monomères formant un uréthanne, (b) un prépolymère d'uréthanne obtenu à partir de monomères formant un uréthanne et (c) des monomères formant un uréthanne; la quantité dudit constituant uréthanne allant de 5 à 95% en poids sur la base du poids total dudit copolymère à séquence d'uréthanne et le poids moléculaire dudit constituant uréthanne allant de 1000 à 100 000, et la polymérisation desdits monomères formant un uréthanne ou dudit prépolymère d'uréthanne pour obtenir un polymère d'uréthanne, ce dernier étant en liaison avec ledit polymère à terminaison amine et formant ledit copolymère à séquence d'uréthanne, ce qui donne une structure dudit PUP dans laquelle U est l'uréthanne, tandis que des matières contenant de l'hydrogène actif autres que les monomères d'uréthanne sont exclues dans les étapes de formation de la séquence ou des séquences de polymère de condensation.

7. Composition de copolymère à séquence uréthanne-urée, comprenant:

un polymère terminé par une amine primaire en liaison terminale avec un polymère d'uréthanne-urée pour forme un copolymère à séquence d'uréthanne-urée; ledit polymère à terminaison amine étant préparé de la manière indiquée dans la revendication 1 et ayant un poids moléculaire de 3000 à 100 000,

caractérisée par le fait que ledit polymère d'uréthanne-urée est le produit de réaction de polyisocyanates avec des composés polyhydroxyliques et des diamines de formule

$$H_2N—R—NH_2$$

dans laquelle R est un groupe aliphatique contenant 2 à environ 20 atomes de carbone, un groupe cycloaliphatique contenant 4 à environ 20 atomes de carbon et un groupe aromatique contenant 6 à environ 20 atomes de carbone, et leurs associations; et ledit composé polyhydroxylique qui porte au moins deux groupes hydroxyle est choisi dans la classe comprenant des alcools dihydroxyliques; des alcools polyhydroxyliques; des phénols dihydroxyliques; des phénols polyhydroxyliques; des polyéther-polyols préparés à partir d'un composé choisi dans la classe comprenant des éthers cycliques ayant 2 à 8 atomes de carbone et des éthers cycliques substitués ayant 2 à 8 atomes de carbone dans le noyau, ledit groupe substitué étant choisi dans la classe comprenant un groupe alkyle ayant 1 à 20 atomes de carbone, un groupe cycloalkyle ayant 4 à 20 atomes de carbone, un noyau aromatique, et un noyau aromatique substitué dont le groupe substituant est un groupe alkyle ayant 1 à 20 atomes de carbone ou un groupe cycloalkyle ayant 4 à 20 atomes de carbone; des polyesterdiols; et des polylactone-diols; lesdits polyisocyanates monomères formant l'uréthanne-urée répondant à la formule

$$R—(N=C=X)_n$$

dans laquelle R est un groupe aliphatique contenant 2 à 20 atomes de carbone, un groupe cycloaliphatique contenant 4 à 20 atomes de carbone, un groupe aromatique contenant 6 à 20 atomes de carbone et leurs associations, *n* a la valeur 2 ou 3 et X est choisi entre l'oxygène et le soufre;

ledit composé polyhydroxylique porteur d au moins deux groupes hydroxyle formant ledit copolymère donnant une structure du type PUP dans laquelle U représente l'urée/uréthanne, la quantité dudit polymère d'uréthanne-urée étant comprise entre environ 5 et environ 95% en poids sur la base du poids total dudit copolymère séquence.

8. Procédé de production d'un copolymère séquencé d'uréthanne-urée, comprenant les étapes de préparation d'un polymère à terminaison amine par le procédé défini dans la revendication 2, caractérisé par la réaction dudit polymère à terminaison amine avec un polymère d'uréthanne-urée tel que défini dans la revendication 7; et la polymérisation dudit constituant formant le polymère d'uréthanne-urée pour former ce dernier polymère; ledit polymère d'uréthanne-urée étant lié audit polymère à terminaison amine et formant ledit copolymère à séquence d'uréthanne-urée en donnant une structure du type PUP dans laquelle U représente l'urée/uréthanne, tandis que des matières contenant de l'hydrogène actif autres que les monomères d'uréthanne-urée sont exclues des étapes de formation de la séquence ou des séquences de polymère de condensation.

9. Composition de mousse de copolymère séquencé de nylon, comprenant un polymère à terminaison amine primaire en liaison terminale avec un constituant polymère du type nylon pour former la composition copolymère à séquence de nylon, ledit polymère à terminaison amine étant préparé de la manière indiquée dans la revendication 1 et ayant un poids moléculaire de 3000 à 100 000, caractérisée par le fait que ledit constituant du type nylon est préparé à partir de monomères choisis entre (a) des lactames susceptibles de polymérisation anionique ayant 3 à 15 atomes de carbone, (b) des chlorures de diacides ayant réagi avec des diamines et (c) des diacides ayant réagi avec des diamines de manière à former leurs sels;

la quantité dudit polymère du type nylon allant de 5 à 95% en poids sur las base du poids total dudit copolymère séquencé et une proportion de 0,5 à 50 parties en poids d'un agent porogène pour 100 parties en poids dudit copolymère séquencé étant utilisée pour préparer la mousse, l'agent porogène étant l'eau, le pentane, l'hexane ou l'heptane.

10. Procédé de production d'une mousse de copolymère séquencé du type nylon, comportant les étapes de:

préparation d'un polymère à terminaison amine par le procédé défini dans la revendication 2, caractérisé par la réaction dudit polymère à terminaison amine avec des monomères formant un nylon pour obtenir un copolymère séquencé, lesdits monomères étant choisis entre (a) des lactames ayant 3 à 15 atomes de carbone, (b) des diamines avec des chlorures de diacides et (c) des sels de diacides et de diamines; ledit composé amidique est choisi entre des amides de l'ammoniac, des amides d'amines primaires, des lactames, des amides d'acides sulfoniques, des sultames et un composé répondant à la formule

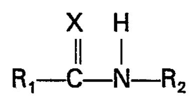

dans laquelle $R_1$ et $R_2$ sont choisis entre un groupe aliphatique contenant 1 à 20 atomes de carbone, un groupe cycloaliphatique contenant 4 à 20 atomes de carbone, un groupe aromatique contenant 6 à 20 atomes de carbone, des associations de ces groupes, et l'hydrogène, et X représente l'oxygène ou le soufre; ledit constituant polymère du type nylon dudit copolymère séquencé étant présent en quantité de 5 à 95% en poids; le poids moléculaire dudit polymère du type nylon allant de 5000 à 50 000; et

la production d'une mousse par addition de 0,5 à 50 parties d'un agent porogène pour 100 parties dudit copolymère séquencé, l'agent porogène étant l'eau, le pentane, l'hexane ou l'heptane, tandis que des matières contenant de l'hydrogène actif autres que les monomères formant un nylon et l'agent porogène sont exclues.

11. Composition de copolymère séquencé imidique, comprenant:

un polymère à terminaison amine primaire en liaison terminale avec un constituant polymère imidique pour former le copolymère séquence;

ledit polymère à terminaison amine étant préparé de la manière indiquée dans la revendication 1 et ayant un poids moléculaire de 3000 à 100 000, caractérisée par le fait que le constituant imidique est le produit de réaction d'une diamine et d'un dianhydride, ladite diamine étant choisie entre une diamine alkylique ayant 2 à 20 atomes de carbone, une diamine cycloalkylique ayant 4 à 20 atomes de carbone, une diamine aromatique ayant 6 à 20 atomes de carbone et une diamine aromatique à substituant alkyle ayant 7 à 20 atomes de carbone; ledit dianhydride étant choisi entre un dianhydride alkylique ayant 8 à 30 atomes de carbone, un dianhydride aromatique ayant 10 à 40 atomes de carbone et un dianhydride aromatique à substituant alkyle ayant 11 à 40 atomes de carbone;

la quantité du polymère imidique allant de 10 à 75% en poids sur la base du poids total dudit copolymère séquencé; et le poids moléculaire du polymère imidique allant de 5000 à 35 000, ledit copolymère étant formé en utilisant un mélange de solvants comprenant du diméthylformamide, du diméthylacétamide ou du diméthylsulfoxyde et du benzène ou du toluène, ce qui donne une structure PIP dans laquelle I est le constituant polymère imidique.

12. Procédé de production d'un copolymère séquencé imidique, comprenant les étapes de:

préparation d'un polymère à terminaison amine par le procédé défini dans la revendication 2, caractérisé par la réaction dudit polymère à terminaison amine avec des monomères formant un imide; et la polymérisation desdits monomères formant un imide pour produire un polymère imidique; ledit polymère imidique étant lié au polymère à terminaison amine et formant le copolymère séquencé imidique, en utilisant un mélange de solvants formé de diméthylformamide, de diméthylacétamide ou de diméthylsulfoxyde et de benzène ou de toluène, ce qui donne une structure PIP dans laquelle I représente l'imide, ledit polymère imidique étant le produit de réaction d'une diamine et d'un dianhydride, ladite diamine étant choisie entre une diamine alkylique ayant 2 à 20 atomes de carbone, une diamine cycloalkylique ayant 4 à 20 atomes de carbone, une diamine aromatique ayant 6 à 20 atomes de carbone;

ledit dianhydride étant choisi entre un dianhydride alkylique ayant 8 à 30 atomes de carbone, un dianhydride aromatique ayant 10 à 40 atomes de carbone et un dianhydride aromatique à substituant alkyle ayant 11 à 40 atomes de carbone; la quantité dudit constituant polymère imidique du copolymère séquencé allant de 10 à 75% en poids sur la base du poids total dudit copolymère séquencé, et le poids moléculaire dudit polymère imidique allant de 5000 à 35 000, tandis que des matières contenant de l'hydrogène actif autres que les monomères formant un imide sont exclues.